# EUROPEAN PATENT SPECIFICATION

(11) **EP 4 625 812 B1**
(45) Date of publication and mention of the grant of the patent: **13.05.2026**
(21) Application number: 25150555.8
(22) Date of filing: 07.01.2025
(51) Int. Cl.: H02S 30/10

(54) **PHOTOVOLTAIC MODULE**
FOTOVOLTAISCHES MODUL
MODULE PHOTOVOLTAÏQUE

(30) Priority: 29.03.2024 CN 202410373774; 22.04.2024 CN 202410489004; 22.04.2024 CN 202420833456 U
(43) Date of publication of application: 01.10.2025
(73) Proprietor: JINKO SOLAR CO., LTD, ShangRao, Jiangxi 334100 (CN); Jinko Solar (Haining) Co., Ltd., Haining City, Zhejiang 314415 (CN); Zhejiang Jinko Solar Co., Ltd., Haining, Zhejiang 314416 (CN)
(72) Inventor: TAO, Wusong, Shangrao, 334100 (CN); CHEN, Zhendong, Shangrao, 334100 (CN); ZHOU, Yunfeng, Shangrao, 334100 (CN); ZHAO, Jinhui, Shangrao, 334100 (CN); CHEN, Xinyi, Shangrao, 334100 (CN); ZHAO, Qiuyu, Shangrao, 334100 (CN); BO, Yaoyi, Shangrao, 334100 (CN); YAO, Yichao, Shangrao, 334100 (CN); GUO, Zhiqiu, Shangrao, 334100 (CN); JIN, Hao, Shangrao, 334100 (CN); XIE, Yunfei, Shangrao, 334100 (CN); WANG, Junqing, Shangrao, 334100 (CN); PENG, Changchun, Shangrao, 334100 (CN); SHI, Jiahui, Shangrao, 334100 (CN); SHI, Tiantian, Shangrao, 334100 (CN)
(74) Representative: Haseltine Lake Kempner LLP

(56) References cited:
- WO-A1-2014/174948
- WO-A1-2023/104098
- CN-U- 218 570 166
- US-A1- 2017 244 357

## Description

### CROSS-REFERENCE TO RELATED APPLICATIONS

The present application claims priority to Chinese patent application No. 202420833456.5, filed on April 22, 2024, and titled "PHOTOVOLTAIC-MODULE MOUNTING STRUCTURE", No. 202410489004.4, filed on April 22, 2024, and titled "PHOTOVOLTAIC MODULE", and. No. 202410373774.2, filed on March 29, 2024, and titled "PHOTOVOLTAIC MODULE".

### TECHNICAL FIELD

The present application relates to the field of solar cell, and in particular, to a photovoltaic module.

### BACKGROUND

A photovoltaic module includes a laminated assembly and a frame sleeved on an edge of the laminated assembly. In prior art, the frame includes a first frame, a second frame, and a third frame. The first frame and the third frame both extend horizontally along a first direction X, and the second frame extends vertically along a thickness direction of the laminated assembly. The two ends of the second frame are connected to the first frame and the third frame, respectively, i.e., and an accommodating space for accommodating edges of the laminated assembly is defined by the first frame, the second frame, and the third frame surrounding.

During a process of horizontally inserting the laminated assembly into the accommodating space along the first direction X, it is required to maintain a horizontal movement of the laminated assembly to reduce a risk of damaging the laminated assembly due to tilting of the laminated assembly, such that an installation of the laminated assembly is more difficult.

WO 2014/174948 A1 discloses a solar cell module. This solar cell module is configured from a solar cell panel, and a frame body for supporting a solar cell by having an end section of the solar cell panel fitted therein. In the solar cell module, the frame body is configured to have a fit-in section for having the solar cell panel fitted therein, the fit-in section has an edge section, the end section of the solar cell panel is fitted in the fit-in section, and the light receiving surface of the solar cell panel is in contact with the edge section.

### SUMMARY

According to various embodiments of the present application, a photovoltaic module is provided. In the photovoltaic module in the present application, an installation of the laminated assembly is easier. The invention is set out in the appended set of claims.

The present application provides a photovoltaic module. The photovoltaic module includes a laminated assembly and a frame. The frame includes a clamping frame. The clamping frame is sleeved on an edge of the laminated assembly. The clamping frame includes a first clamping portion. The first clamping portion is disposed on a side of the laminated assembly away from sunlight. The first clamping portion includes a first surface and a second surface. Along a thickness direction of the laminated assembly, the first surface and the second surface of the first clamping portion are both disposed on a side of the first clamping portion towards the laminated assembly. The first surface and the second surface of the first clamping portion are both inclined and extend away from the laminated assembly. The second surface of the first clamping portion is located on a side of the first surface of the first clamping portion away from the edge of the laminated assembly. An angle *α₁* is defined between an inclined direction of the first surface of the first clamping portion and the thickness direction of the laminated assembly. An angle *α*₂ is defined between an inclined direction of the second surface of the first clamping portion and the thickness direction of the laminated assembly. The angle *α₁* between the inclined direction of the first surface of the first clamping portion and the thickness direction of the laminated assembly is less than the angle *α*₂ between the inclined direction of the second surface of the first clamping portion and the thickness direction of the laminated assembly.

The above general description and the subsequent detailed description are only exemplary and should not limit a scope of the present application.

Details of one or more embodiments of the present application are presented in the attached drawings and descriptions below. And other features, purposes and advantages of the present application will become apparent from the description, drawings and claims.

### BRIEF DESCRIPTION OF THE DRAWINGS

For a better description and illustration of embodiments and/or examples of the present application disclosed herein, reference may be made to one or more attached drawings. Additional details or examples used to describe the drawings should not be considered as limiting the scope of any of the present application, currently described embodiments and/or examples, and currently understood best modes of the present application.
FIG. 1 is a bottom view of a photovoltaic module of an embodiment in the present application.
FIG. 2 is a bottom view of a photovoltaic module of another embodiment in the present application.
FIG. 3 is a cross-sectional schematic view of a part of a laminated assembly of a photovoltaic module of an embodiment in the present application.
FIG. 4 is a partial cross-sectional schematic view of a battery string of the laminated assembly of FIG. 3 in an embodiment of the present application.
FIG. 5 is a schematic diagram of a frame of an embodiment in the present application.
FIG. 6 is a partial schematic diagram of the frame in FIG. 5.
FIG. 7 is a schematic diagram of a frame of another embodiment in the present application.
FIG. 8 is a schematic diagram of a frame of another embodiment in the present application.
FIG. 9 is a schematic diagram of a frame of another embodiment in the present application.
FIG. 10 is a schematic diagram of a photovoltaic module mounting structure in the present application.
FIG. 11 is another schematic diagram of a frame and a fixing assembly being assembled along a direction in the present application.
FIG. 12 is another schematic diagram of a frame and a fixing assembly being assembled along another direction in the present application.
FIG. 13 is another schematic diagram of a frame in the present application.
FIG. 14 is an exploded diagram of a frame and a fixing assembly in the present application.
FIG. 15 is a schematic diagram of another photovoltaic module mounting structure in the present application.
FIG. 16 is a schematic diagram of another frame, another laminated assembly and another fixing assembly being assembled in the present application.
FIG. 17 is a schematic diagram of a laminated assembly in the present application.
FIG. 18 is a schematic diagram of another fixing assembly in the present application.
FIG. 19 is a schematic diagram of another fixing assembly in the present application.
FIG. 20 is a schematic diagram of another fixing assembly hiding a first connecting component and a second connecting component in the present application.
FIG. 21 is a schematic diagram of another frame in the present application.
FIG. 22 is a schematic diagram of a frame in a first style of an embodiment in the present application.
FIG. 23 is a top view of a corner bracket of an embodiment in the present application.
FIG. 24 is a top view of a corner bracket of another embodiment in the present application.
FIG. 25 is a cross-sectional schematic view of two types of frames assembling with a corner bracket along a horizontal direction of an embodiment in the present application.
FIG. 26 is an partial enlarged view of a recess of an embodiment in the present application.
FIG. 27 is a cross-sectional schematic view of a corner bracket and a frame being assembled along a horizontal direction in an embodiment of the present application.
FIG. 28 is a cross-sectional schematic view of a corner bracket being assembled with a frame along a horizontal direction of another embodiment in the present application.
FIG. 29 is a schematic diagram of a frame in a second style of another embodiment in the present application.
FIG. 30 is a schematic diagram of a frame in a third style of another embodiment in the present application.
FIG. 31 is a schematic diagram of two fixing assemblies and the frame in FIG. 30 being assembled of an embodiment in the present application.
FIG. 32 is a schematic diagram of a frame in a fourth style of another embodiment in the present application.
FIG. 33 is a schematic diagram of a frame in a fifth style of another embodiment in the present application.
FIG. 34 is a schematic diagram of a fixing assembly and the frame in FIG. 33 being assembled of an embodiment in the present application.
FIG. 35 is a schematic diagram of a frame in a sixth style of another embodiment in the present application.
FIG. 36 is a schematic diagram of assembling a fixing assembly and the frame in FIG. 35 being assembled of an embodiment in the present application.
FIG. 37 is a schematic diagram of a frame in a seventh style of another embodiment in the present application.
FIG. 38 is a schematic diagram of a fixing assembly and the frame in FIG. 37 being assembled of an embodiment in the present application.
FIG. 39 is an enlarged view of the frame in FIG. 30 of an embodiment in the present application.

Reference signs are as follows: 1 represents a laminated assembly; 11 represents a first covering plate; 12 represents a first adhesive film; 13 represents a solar cell; 131 represents a first anti-reflection layer; 132 represents a front-side field region; 133 represents a substrate; 134 represents an emitter; 135 represents a back-side field region; 136 represents a passivation layer; 137 represents a second anti-reflection layer; 138 represents a first electrode; 139 represents a second electrode; 14 represents a solder strip; 15 represents a second adhesive film; 16 represents a second covering plate; 2 represents a frame; 21 represents a clamping frame; 211 represents a first clamping portion; 2111 represents an overflow groove; 211A represents a first surface; 211B represents a second surface; 212 represents a second clamping portion; 213 represents a third clamping portion; 214 represents a first groove; 22 represents a first supporting portion; 23 represents a second supporting portion; 24 represents a third supporting portion; 25 represents a cavity; 2501 represents a second hole; 251 represents a snapping portion; 2510 represents a first snapping component; 2511 represents a second snapping component; 25101 represents a second groove; 25111 represents a third groove; 2113 represents a second bending portion; 2534 represents a first bending portion; 26 represents an extending portion; 27 represents a reinforcing frame; 28 represents a reinforcing rib; 3 represents a junction box; 31 represents a first junction box; 32 represents a second junction box; 4 represents an inverter; 5 represents a fixing assembly; 51 represents an inserting portion; 510 represents a snapping block; 5101 represents a first hole; 52 represents a connecting portion; 521 represents a transverse plate; 522 represents a vertical plate; 53 represents a fixing portion; 531 represents a fixing block; 5310 represents a third hole; 6 represents a bracket; 71 represents a first connecting component; 72 represents a second connecting component; 8 represents a corner bracket; 801 represents a corner-bracket connecting portion; 811 represents a first sub-connecting plate; 821 represents a second sub-connecting plate; 802 represents a recess; 803 represents a snapping structure; 911 represents a first through hole; 912 represents a second through hole; 901 represents a first mounting hole; and 902 represents a second mounting hole; and 913 represents a first blind hole.

### DETAILED DESCRIPTION

The technical scheme in the embodiment of the present application will be described clearly and completely with the attached drawings.

Obviously, the described embodiment is only a part of the embodiment of the present application, not the whole embodiment. Based on the embodiments in the present application, all other embodiments obtained by ordinary technicians in this field without creative work belong to the protection scope of the present application.

The terms used in embodiments of the present application are for the purpose of describing specific embodiments only and are not intended to limit a scope of the present application.

Singular forms of "an", "the", and "such" used in the embodiments and claims of the present application are also intended to include the majority form, unless the context clearly indicates otherwise.

It should be understood that the term "and/or" used in the present application is only a description of an association relationship between related objects, indicating that there can be three types of relationships, for example, A and/or B, which can represent: an existence of A alone, an existence of A and B at the same time, and an existence of B alone. In addition, a character "/" in the present application generally indicates that the related objects before and after are in an "or" relationship.

The terms "vertical", "horizontal", "left", "right" and similar expressions are illustrated by an angle shown in drawings and do not limit the embodiments of the present application. when a member is considered "connected to" another member, it can be directly fixed to another member or there may be a centered member present simultaneously.

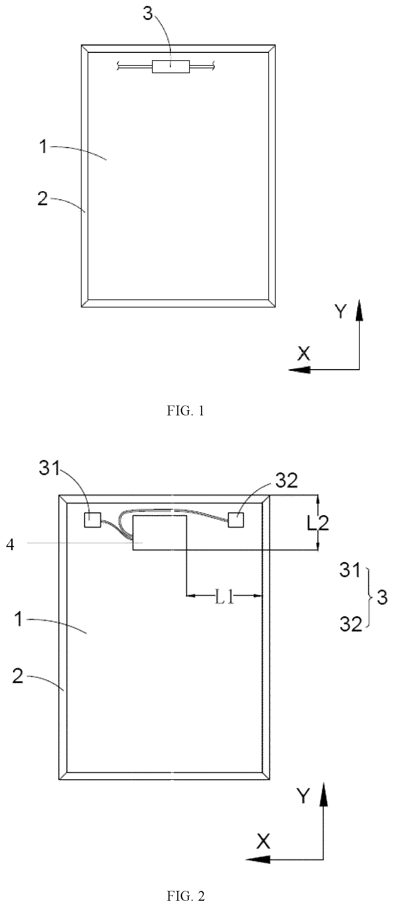

The present application provides a photovoltaic module. Referring to FIG. 1, the photovoltaic module includes a laminated assembly 1, a frame 2 sleeved on an edge of the laminated assembly 1, and a junction box 3 mounted on the laminated assembly 1. The junction box 3 is electrically connected to the laminated assembly 1. The junction box 3 is configured to realize that adjacent photovoltaic modules are electrically connected to each other and the photovoltaic module is electrically connected to external electrical appliances.

The junction box 3 is disposed on a back surface of the laminated assembly 1 to delay aging of the junction box 3, minimize a risk of damage of the junction box 3 due to aging, corrosion, immersion in rainwater and so on, thereby prolonging a service life of the junction box 3, and facilitating improving working stability of the photovoltaic module. Alternatively, the junction box 3 can be disposed on a light-facing surface of the laminated assembly 1 to avoid an occupying space of the junction box 3 on the back surface of the laminated assembly 1, thereby reducing an installation height of the photovoltaic module.

In an embodiment, referring to FIG. 1, the junction box 3 is an integrated junction box, i.e., positive and negative busbars of the laminated assembly 1 are respectively electrically connected to the same integrated junction box. The integrated junction box includes a positive cable and a negative cable. The junction box 3 is configured to realize that the adjacent photovoltaic modules are electrically connected to each other, which is taken as an example, the integrated junction box is electrically connected to one adjacent photovoltaic module via the positive cable, and is electrically connected to the other adjacent photovoltaic module via the negative cable, thereby realizing series or parallel connection between several adjacent photovoltaic modules.

In another embodiment, referring to FIG. 2, the junction box 3 further includes a first junction box 31 and a second junction box 32. The first junction box 31 is connected to the positive busbar of the laminated assembly 1. A cable of the first junction box 31 is electrically connected to one photovoltaic module adjacent to a side of the first junction box 31, and the second junction box 32 is connected to the negative busbar of the laminated assembly 1. A cable of the second junction box 32 is electrically connected to the other photovoltaic module adjacent to the other side of the first junction box 31, thereby realizing series or parallel connection between adjacent photovoltaic modules. The junction box 3 can be the integrated junction box, and alternatively, the junction box 3 can include a first junction box 31 and a second junction box 32 separated from each other, thereby increasing selection diversity of the junction box 3. When the junction box 3 is the integrated junction box, it facilitates simplifying a mounting operation of the junction box 3 on the laminated assembly 1, and reducing mounting time of the junction box 3. When the junction box 3 includes the first junction box 31 and the second junction box 32 separated from each other, it facilitates reducing a cost of the junction box 3.

The laminated assembly 1 includes two shorter sides extending along a first direction X, and two longer sides extending along a second direction Y. Referring to FIGs. 1 and 2, the junction box 3 can be disposed on a side of the laminated assembly 1 towards two shorter sides along the second direction Y. Alternatively, the junction box 3 can be disposed on a side of the laminated assembly 1 towards the two longer sides along the first direction X. When the junction box 3 includes the first junction box 31 and the second junction box 32, along the first direction X, the first junction box 31 and the second junction box 32 can both be disposed towards a left longer side of the laminated assembly 1, such that the first junction box 31 and the second junction box 32 are disposed on the same side of the laminated assembly 1 and distributed along the second direction Y. Alternatively, the first junction box 31 can be disposed towards the left longer side of the laminated assembly 1, and the second junction box 32 can be disposed towards a right longer side of the laminated assembly 1, such that the first junction box 31 and the second junction box 32 are disposed on two sides of the laminated assembly 1, respectively, and distributed along the first direction X. Alternatively, along the second direction Y, the first junction box 31 and the second junction box 32 can be both disposed on a left shorter side of the laminated assembly 1, such that the first junction box 31 and the second junction box 32 are disposed on the same side and distributed along the first direction X. Alternatively, the first junction box 31 can be disposed towards the left shorter side of the laminated assembly 1, and the second junction box 32 can be disposed towards a right shorter side of the laminated assembly 1, such that the first junction box 31 and the second junction box 32 are disposed on two sides of the laminated assembly 1 respectively and distributed along the first direction Y. A mounting position of the junction box 3, i.e., distribution of the junction box 3 is not limited in the present application, facilitating mounting the junction box 3.

Referring to FIG. 2, the photovoltaic module further includes an inverter 4. The junction box 3 and the inverter 4 are located on the same layer of the photovoltaic module, which is conducive for the junction box 3 being electrically connected to the inverter 4. For example, referring to FIG. 2, on the second direction Y, the junction box 3 and the inverter 4 are both disposed towards shorter side of the laminated assembly 1. The junction box 3 and the inverter 4 are arranged along the first direction X.

Along the first direction X, a minimum vertical distance *L*₁ between the inverter 4 and an edge of the photovoltaic module satisfies following relationship: 350 mm ≤ *L*₁ ≤ 400 mm. The minimum vertical distance *L*₁ between the inverter 4 and an edge of the photovoltaic module between the inverter 4 and an edge of the photovoltaic module can be 350 mm, 352 mm, 354 mm, 356 mm, 358 mm, 360 mm, 362 mm, 364 mm, 368 mm, 370 mm, 372 mm, 374 mm, 376 mm, 378 mm, 380 mm, 382 mm, 384 mm, 386 mm, 388 mm, 390 mm, 392 mm, 394 mm, 396 mm, 398 mm, 400 mm and so on. When the minimum vertical distance *L*₁ between the inverter 4 and an edge of the photovoltaic module between the inverter 4 and an edge of the photovoltaic module is relative large or small, such as less than 350 mm, or greater than 400 mm, the inverter 4 may extends beyond the photovoltaic module to be partially suspended or exposed, thereby reducing connection stability between the inverter 4 and the laminated assembly 1. Therefore, when the minimum vertical distance *L*₁ between the inverter 4 and an edge of the photovoltaic module satisfies the relationship: 350 mm ≤ *L*₁ ≤ 400 mm, a risk of damage of the inverter 4 is reduced, improving working stability of the inverter 4 and prolonging a service life of the inverter 4.

Along the second direction Y, a maximum vertical distance *L*₂ between the inverter 4 and the edge of the photovoltaic module satisfies following relationship: 240 mm ≤ *L*₂ ≤ 300 mm. The maximum vertical distance *L*₂ between the inverter 4 and the edge of the photovoltaic module can be 240 mm, 242 mm, 244 mm, 246 mm, 248 mm, 250 mm, 252 mm, 254 mm, 256 mm, 258 mm, 260 mm, 262 mm, 264 mm, 266 mm, 268 mm, 270 mm, 272 mm, 274 mm, 276 mm, 278 mm, 280 mm, 282 mm, 284 mm, 286 mm, 288 mm, 290 mm, 292 mm, 294 mm, 296 mm, 298 mm, 300 mm and so on. When the maximum vertical distance *L*₂ between the inverter 4 and the edge of the photovoltaic module is relative small, such as less than 240 mm, the inverter 4 may extend beyond the photovoltaic module to be partially suspended or exposed. When the maximum vertical distance *L*₂ is relative great, such as greater than 300 mm and the junction box 3 is fixed, a distance between the junction box 3 and the inverter 4 increases, such that a length of a cable configured for connecting the junction box 3 with the inverter 4 becomes longer, increasing a cost for connecting the junction box 3 with the inverter 4; or when a distance between the junction box 3 and the inverter 4 is constant, a distance between the junction box 3 and the edge of the laminated assembly 1 becomes longer, thereby increasing difficulty of connecting the junction box 3 with the positive busbar and the negative busbar of the laminated assembly 1. Therefore, when the maximum vertical distance *L*₂ between the inverter 4 and the edge of the photovoltaic module satisfies the relationship: 240 mm ≤ *L*₂ ≤ 300 mm, a distance between the junction box 3 and the inverter 4 is reduced, lowering a cost of connecting the junction box 3 with the inverter 4 and decreasing the distance between the junction box 3 and the laminated assembly 1, thereby reducing difficulty of connecting the junction box 3 with the positive and negative busbars of the laminated assembly 1.

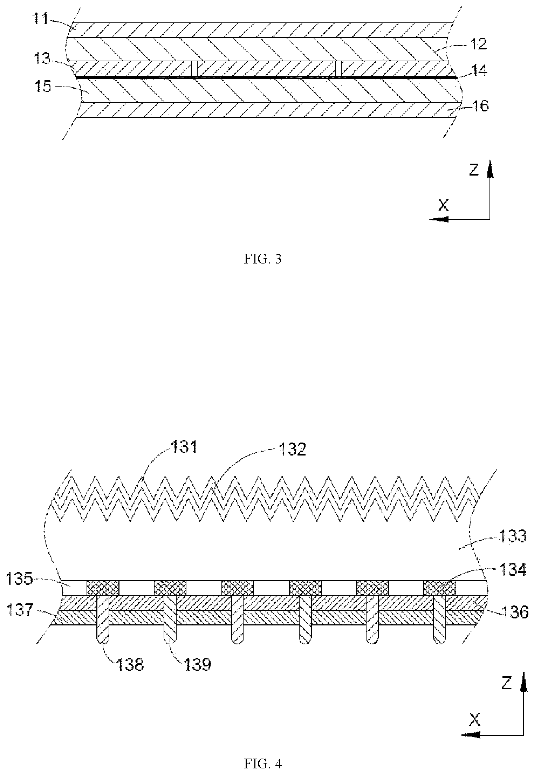

Referring to FIG. 3, the laminated assembly 1 includes a first covering plate 11, a second adhesive film 12, a battery string, a second adhesive film 15 and a second covering plate 12. The battery string includes a plurality of solar cells 13. Adjacent solar cells are connected in series or parallel via a solder strip 14. The first covering plate 11 and the second covering plate 16 are distributed on two sides of the battery string along a thickness direction Z of the laminated assembly 1. For example, the first covering plate 11 is disposed on a side of the battery string towards sunlight. The second covering plate 16 is disposed on a side of the battery string away from the sunlight. The first adhesive film 12 is disposed between the first covering plate 11 and the battery string. The second adhesive film 15 is disposed between the second covering plate 16 and the battery string. The first covering plate 11 and the second covering plate 16 are both made of glass, such that the photovoltaic module is a double-glass component, i.e., a back surface of the photovoltaic module can also absorb light, facilitating improving output power of photovoltaic module. Alternatively, the first covering plate 11 is made of glass, and the second covering plate 16 is an opaque backplane to improve structural strength of the second covering plate 16.

Thickness of the first covering plate 11 and the second covering plate 16 are not limited in the present application. For example, the thickness of the first covering plate 11 can be 2.5 mm, 2.6 mm, 2.7 mm, 2.8 mm, 2.9 mm, 3 mm, 3.1 mm, 3.2 mm, 3.3 mm, 3.4 mm, 3.5 mm and so on. The thickness of the second covering plate 16 can be 2.5 mm, 2.6 mm, 2.7 mm, 2.8 mm, 2.9 mm, 3 mm, 3.1 mm, 3.2 mm, 3.3 mm, 3.4 mm, 3.5 mm and so on. The thickness of the first covering plate 11 and the second covering plate 16 can be the same or different.

The present application does not specially limit a structure and a type of the solar cell 13. The type of the solar cell 13 includes but is not limited to Backcontact (BC) cell, Tunneloxide Passivated Contact (TOPCon) cell , Heterojunction with Intrinsic Thin-film (HJT) cell, Passivated Emitter Rear Cell (PERC) or perovskite solar cell.

As for the BC cell, such as Interdigitated Back Contact (IBC) cell , referring to FIG. 4, the IBC cell sequentially includes a first anti-reflection layer 131, a front-side field region 132, a substrate 133, an emitter 134, a back-side field region 135, a passivation layer 136, a second anti-reflection layer 137 and a first electrode 138 and a second electrode 139 separated from the first electrode 138. The use of ion implantation technology in the IBC cell can obtain P and N regions with good uniformity and precise controllable junction depth. There is no gate lines on a front side of the IBC cell, which can eliminate loss of light shielding current of metal electrodes and achieve maximum utilization of incident photons. Compared a conventional IBC cell, a short-circuit current can increase by about 7%. Due to the back contact structure, it is not required to consider the issue of gate line obstruction. The gate line ratio can be appropriately widened to reduce series resistance and achieve a high fill factor. Designs of surface passivation and surface trapping structures can be optimized, lowering recombination rate of the front side and surface reflections.

The TOPCon cell sequentially includes a metal silver electrode, a front surface silicon nitride passivation layer, a boron doped emitter, an N-type base silicon layer, a diffusion doped layer, ultra-thin silicon oxide, doped polycrystalline silicon, silicon nitride, and a metal silver electrode along a thickness direction of the TOPCon cell. A back side of the TOPCon cell is composed of a layer of ultra-thin silicon oxide (a thickness is in a range of 1 nm to 2 nm) and a layer of phosphorus doped microcrystalline amorphous mixed Si thin film, which together form a passive contact structure. The passive contact structure can block recombination of minority carriers holes, and improve open circuit voltage and short-circuit current of the TOPCon cell. The ultra-thin oxide layer can enable majority carrier electrons to tunnel into the polycrystalline silicon layer while blocking the recombination of minority carrier holes. An excellent passivation effect of the ultra-thin silicon oxide and heavily doped silicon thin films causes a surface energy band of silicon wafers to bend, thereby forming a field passivation effect. A probability of electron tunneling increases significantly, contact resistance decreases, and the open circuit voltage and the short-circuit current of the TOPCon cell are improved, thereby enhancing conversion efficiency of the TOPCon cell.

The HJT cell sequentially includes a front low-temperature silver electrode, a front conductive film, an N-type amorphous silicon film, an intrinsic amorphous silicon film, an N-type base silicon layer, an intrinsic amorphous silicon film, a P-type amorphous silicon film, a back conductive film, and a back low-temperature silver electrode along a thickness direction of the HJT cell.

The PPERC cell sequentially includes a metal silver electrode, a front surface silicon nitride passivation layer, a phosphorus layer emitter, a P-type base silicon layer, a local aluminum back field, a metal aluminum back electrode, and a back passivation layer along a thickness direction of the PPERC cell. The PPERC cell adopts a passivation film to passivate a back side of the PPERC cell, enhancing internal back reflection of light on the silicon substrate, reducing a recombination rate of the back side of the PPERC, and improving the efficiency of the PPERC cell.

The perovskite cell sequentially includes a substrate material, a conductive thin film, an electron transport layer (titanium dioxide), a perovskite absorption layer (hole transport layer), and a metal cathode along a thickness direction of the perovskite cell. Perovskite materials have high light absorption coefficients and long carrier diffusion distances. Photons absorbed by perovskite materials are converted into electrons, which are easily collected by electrodes with minimal loss. Therefore, it can generate high photovoltaic voltage and current, resulting in that the perovskite cell exhibits high photoelectric conversion efficiency.

It does not specially limit the number of the solar cell 13 in the present application, for example, the number of the solar cell 13 can be 60, 62, 64, 66, 68, 70, 72, 74, 76, 78, 80, 82, 84, 86, 88, 90, 92, 94, 96, 98, 100, 102, 104, 106, 108, 110, 112, 114, 116, 118, 120 and so on.

The laminated assembly 1 includes two first edges along the first direction X opposite to each other and two second edges along the second direction Y. The two first edges are longer sides of the laminated assembly 1, the two second edges are shorter sides of the laminated assembly 1. The frame 2 sleeved on the two first edges are taken as an example to introduce a specific structure of the frame 2.

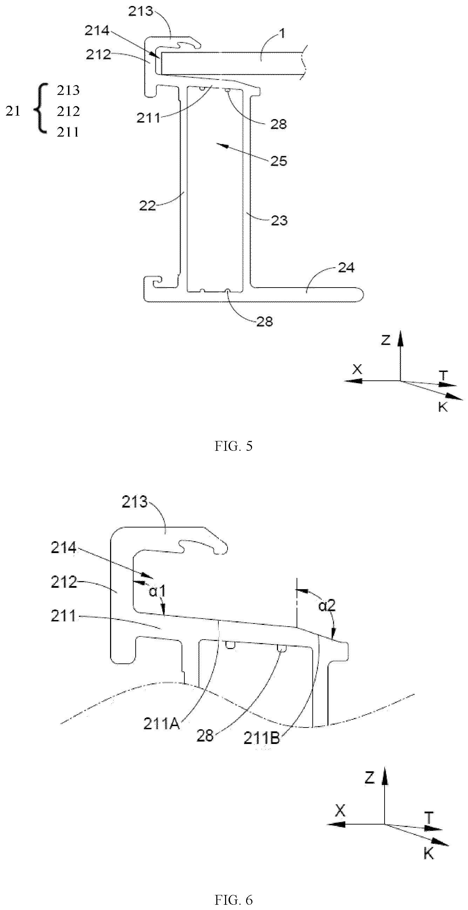

Referring to FIG. 5, the frame 2 includes a clamping frame 21 and a supporting frame. A first groove 214 configured to accommodate an edge of the laminated assembly 1 is defined by the clamping frame 21 surrounding. The laminated assembly 1 is fixed on the clamping frame 21 via structural adhesive bonding. The supporting frame is connected to the clamping frame 21. The structure frame is disposed on a side of the laminated assembly 1 away from the sunlight along the thickness direction Z of the laminated assembly 1, i.e., the clamping frame 21 is disposed between the laminated assembly 1 and the supporting structure. The supporting frame is configured to be fixedly connected to a target object to realize mounting the photovoltaic module on the target object .

A material of the structural adhesive can be single component silicone structural adhesive, two-component silicone structural adhesive, high-performance silicone structural adhesive, neutral transparent silicone structural adhesive, epoxy resin structural adhesive, polyurethane structural adhesive, acrylic structural adhesive, silicone rubber structural adhesive, or polyamide structural adhesive, which is not limited herein.

The target object includes but are not limited to a floor, a wall, a roof, a color steel tile and so on. When the target object is a roof, the photovoltaic module can replace a part of tiles, thereby increasing an installation height of the photovoltaic module, minimizing a risk of obstruction from adjacent buildings, and facilitating extending an illumination time of the photovoltaic module, thereby improving working stability and output power of the photovoltaic module. In addition, when color of the photovoltaic module is similar or the same as that of tiles, it can enhance overall aesthetics of buildings.

Referring to FIG. 5, the clamping frame 21 includes a first clamping portion 211, a second clamping portion 212 and a third clamping portion 213. The first clamping portion 211 and the third clamping portion 213 are disposed on two sides of the laminated assembly 1 along the thickness of the laminated assembly 1, respectively, i.e., the first clamping portion 211 is disposed on the back side of the laminated assembly 1, and the third clamping portion 213 is located on the light-facing side of the laminated assembly 1. Two ends of the second clamping portion 212 are connected to the first clamping portion 211 and the third clamping portion 213 respectively. The first groove 214 is defined by the third clamping portion 213, the second clamping portion 212 and the first clamping portion 211 surrounding. The supporting frame is connected to a side of the first clamping portion 211 away from the laminated assembly 1. The supporting frame includes a first supporting portion 22 and a second supporting portion 23 arranged along the first direction X opposite to each other. The first supporting portion 22 is disposed on a side of the second supporting portion 23 towards the first edge of the laminated assembly 1.

Referring to FIG. 6, the first clamping portion 211 includes a first surface 211A and a second surface 211B. Along a thickness direction of the laminated assembly 1, the first surface 211A and the second surface 211B of the first clamping portion 211 are both disposed on a side of the first clamping portion 211 towards the laminated assembly 1. The first surface 211A and the second surface 211B of the first clamping portion 211 are both inclined and extend away from the laminated assembly 1. The second surface 211B of the first clamping portion 211 is located on a side of the first surface 211A of the first clamping portion 211 away from the edge of the laminated assembly 1, i.e., the first surface 211A of the laminated assembly 1 is located between the second surface 211B of the laminated assembly 1 and the second clamping portion 212. An angle *α*₁ is defined between an inclined direction of the first surface 211A of the laminated assembly 1 of the first clamping portion 211 and the thickness direction of the laminated assembly 1. An angle *α*₂ is defined between an inclined direction of the second surface 211B of the first clamping portion 211 and the thickness direction of the laminated assembly 1. The angle *α*₁ between the inclined direction T of the first surface 211A of the first clamping portion 211 and the thickness direction Z of the laminated assembly 1 is less than the angle *α*₂ between the inclined direction K of the second surface 211B of the first clamping portion 211 and the thickness direction Z of the laminated assembly 1 satisfy following relationship: *α*₁ < *α*₂.

A installation process of the photovoltaic module is as follows: along the third direction T, the laminated assembly 1 is inserted into the first groove 214 from a side of the frame 2 at an angle. After the two first edges and/or two second edges of the laminated assembly 1 are each inserted into the first groove 214, the structural adhesive is injected into the first groove 214 to achieve adhesive fixation between the laminated assembly 1 and the frame 2. After the structural adhesive is cured, the edges of the photovoltaic module is trimmed to clean up any spilled structural adhesive. Afterwards, the photovoltaic module can be packed, stored, or transported. When the photovoltaic module is required to be put into use, the frame 2 is fixed on a pressure block and/or purlin on the roof, so that the frame 2 is fixed on the target object.

In the present application, the first surface 211A of the first clamping portion 211 is inclined, such that during a process of connecting the laminated assembly 1 with the frame 2, the laminated assembly 1 can be obliquely inserted into the first groove 214. Compared with horizontally inserting the laminated assembly into the first groove 214, a difficulty of obliquely inserting the laminated assembly 1 into the first groove 214 is reduced, which is conducive to improving assembling efficiency between the laminated assembly 1 and the frame 2, and minimizing a risk of damaging the edge of the laminated assembly 1 during an inserting process of the laminated assembly 1, and facilitating improving assembly yield of the photovoltaic module. An inclined angle of the second surface 211B of the first clamping portion 211 is greater than an inclined angle of the first surface 211A of the first clamping portion 211, such that the second surface 211B of the first clamping portion 211 can play a guiding role for the laminated assembly 1, facilitating reducing difficulty of inserting the laminated assembly 1 and processing the first surface 211A of the first clamping portion 211 and the second surface 211B of the first clamping portion 211, and reducing a process cost of the frame 2.

In one possible design, a surface of the first clamping portion 211 away from the laminated assembly 1 can horizontally extend along the first direction X, i.e., the thickness of the first clamping portion 211 is gradually reduced. In another possible design, a surface of the first clamping portion 211 away from the laminated assembly 1 is inclined and extends, such that the thickness of the first clamping portion is substantially the same, facilitating improving strength of the first clamping portion 211.

The angle *α*₁ between the inclined direction T of the first surface 211A of the first clamping portion 211 and the thickness direction Z of the laminated assembly 1 satisfies following relationship: 90° < *α*₁ ≤ 100°. The angle *α*₁ between the inclined direction T of the first surface 211A of the first clamping portion 211 and the thickness direction Z of the laminated assembly 1 can be 91°, 91.5°, 92°, 92.5°, 93°, 93.5°, 94°, 94.5°, 95°, 95.5°, 96°, 96.5°, 97°, 97.5°, 98°, 98.5°, 99°, 99.5°, 100° and so on.

When the angle *α*₁ between the inclined direction T of the first surface 211A of the first clamping portion 211 and the thickness direction Z of the laminated assembly 1 is relative great, such as the angle *α*₁ between the inclined direction T of the first surface 211A of the first clamping portion 211 and the thickness direction Z of the laminated assembly 1 is greater than 100°, a volume of the structural adhesive required to be filled between the first surface 211A of the first clamping portion 211 and the laminated assembly 1 is relatively large, thereby increasing a material cost of fixing the frame 2 with the laminated assembly 1, and prolonging time required for the structural adhesive curing. Therefore, the angle *α*₁ between the inclined direction T of the first surface 211A of the first clamping portion 211 and the thickness direction Z of the laminated assembly 1 is less than or equal to 100°, a risk of a relative large volume of the required structure adhesive due to the relative great inclined angle T of first surface 211A of the first clamping portion 211 is decreased, thereby reducing a bonding cost between the laminated assembly 1 and the frame 2, facilitating shortening curing time of the structural adhesive and an assembly cycle of the photovoltaic module.

The angle *α*₁ between the inclined direction T of the first surface 211A of the first clamping portion 211 and the thickness direction Z of the laminated assembly 1 and the angle *α*₂ between the inclined direction K of the second surface 211B of the first clamping portion 211 and the thickness direction Z of the laminated assembly 1 satisfy following relationship: 10° ≤ *α*₂ - *α*₁ ≤ 20°. For example, a difference between the angle *α*₁ between the inclined direction T of the first surface 211A of the first clamping portion 211 and the thickness direction Z of the laminated assembly 1 and the angle *α*₂ between the inclined direction K of the second surface 211B of the first clamping portion 211 and the thickness direction Z of the laminated assembly 1 can be 10°, 10.5°, 11°, 11.5°, 12°, 12.5°, 13°, 13.5°, 14°, 14.5°, 15°, 15.5°, 16°, 16.5°, 17°, 17.5°, 18°, 18.5°, 19°, 19.5°, 20° and so on.

When the difference between the angle *α*₁ between the inclined direction T of the first surface 211A of the first clamping portion 211 and the thickness direction Z of the laminated assembly 1 and the angle *α*₂ between the inclined direction K of the second surface 211B of the first clamping portion 211 and the thickness direction Z of the laminated assembly 1 is relative small, such as the difference between the angle *α*₁ between the inclined direction T of the first surface 211A of the first clamping portion 211 and the thickness direction Z of the laminated assembly 1 and the angle *α*₂ between the inclined direction K of the second surface 211B of the first clamping portion 211 and the thickness direction Z of the laminated assembly 1 is less than 10°, a guiding effect of the second surface 211B of the first clamping portion 211 on the laminated assembly 1 is relative poor. When the difference between the angle *α*₁ between the inclined direction T of the first surface 211A of the first clamping portion 211 and the thickness direction Z of the laminated assembly 1 and the angle *α*₂ between the inclined direction K of the second surface 211B of the first clamping portion 211 and the thickness direction Z of the laminated assembly 1 is relative great, such as the difference between the angle *α*₁ between the inclined direction T of the first surface 211A of the first clamping portion 211 and the thickness direction Z of the laminated assembly 1 and the angle *α*₂ between the inclined direction K of the second surface 211B of the first clamping portion 211 and the thickness direction Z of the laminated assembly 1 is greater than 20°, the volume of the structural adhesive required to be filled between the first surface 211A of the first clamping portion 211 and the laminated assembly 1 is relatively large, thereby increasing the material cost of fixing the frame 2 with the laminated assembly 1, and prolonging the time required for the structural adhesive curing. Furthermore, a risk of the structural adhesive in the first clamping groove 214 flowing out of the first groove 214 increases, resulting in poor adhesion between the first groove portion 211 and the laminated assembly 1. Therefore, when the difference between the angle *α*₁ between the inclined direction T of the first surface 211A of the first clamping portion 211 and the thickness direction Z of the laminated assembly 1 and the angle *α*₂ between the inclined direction K of the second surface 211B of the first clamping portion 211 and the thickness direction Z of the laminated assembly 1 satisfies the relationship: 10° ≤ *α*₂ - *α*₁ ≤ 20°, the guiding effect of the second surface 211B of the second clamping portion 211 on the laminated assembly 1 is improved, the material cost of fixing the frame 2 and the laminated assembly 1 is reduced, the risk of structural adhesive flowing out of the first groove 214 is reduced, resulting in improving adhesive between the first clamping portion 211 and the laminated assembly 1.

In an embodiment, the second clamping portion 212 is aligned with the first support portion 22 along the thickness direction Z of the laminated assembly 1, i.e., along the thickness direction Z of the laminated assembly 1, the first supporting portion 22 is disposed directly down the second clamping portion 212, the first supporting portion 22 can play a supporting role for the second clamping portion 212, a risk of deforming and damaging the second clamping portion 212 when the laminated assembly 1 suffers from a force upwards along the thickness direction Z of the laminated assembly 1 (for example, when the laminated assembly 1 is subject to wind uplift), resulting in improving strength of the frame 2 and an anti-wind-uplift performance of the frame 2 and the photovoltaic module.

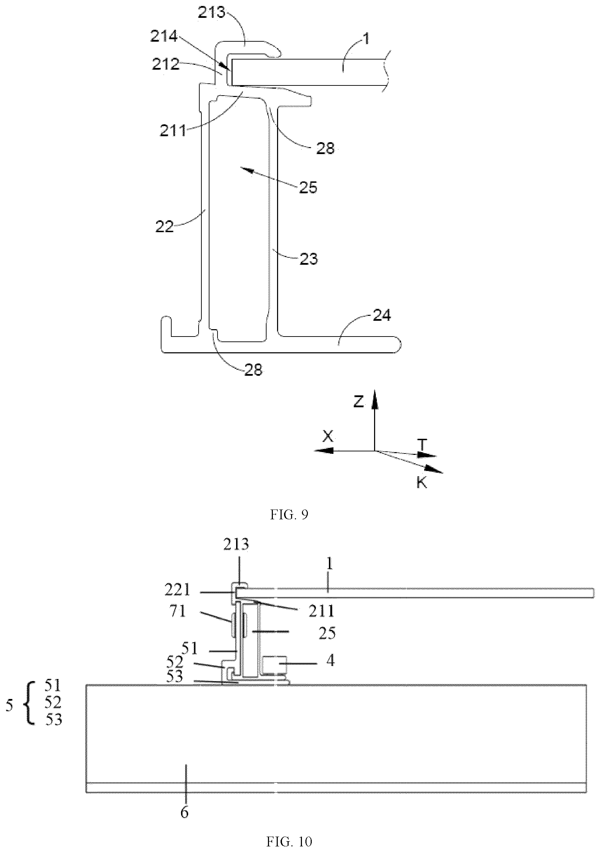

In another embodiment, a distance between the second clamping portion 212 and the first supporting portion 22 along the first direction X is greater than 0. In one possible design, referring to FIGs. 5 to 8, along the first direction X, the second clamping portion 212 is located on a side of the first supporting portion 22 away from the laminated assembly 1. The first supporting portion 22 can play a supporting role for the first clamping portion 211, thereby minimizing a risk of deforming and damaging the first clamping portion 211. In another possible design, referring to FIG. 9, along the first direction X, the first supporting portion 22 is located on a side of the second clamping portion 212 away from the laminated assembly 1. A drainage channel is defined by the first supporting portion 22, the first clamping portion 211 and the second clamping portion 212 surrounding, such that accumulated water on the light-facing side of the photovoltaic module can flow along the drainage channel and leave the photovoltaic module, resulting in minimizing a risk of water accumulation on the light-facing side of the photovoltaic module, and facilitating improving working stability of the photovoltaic module.

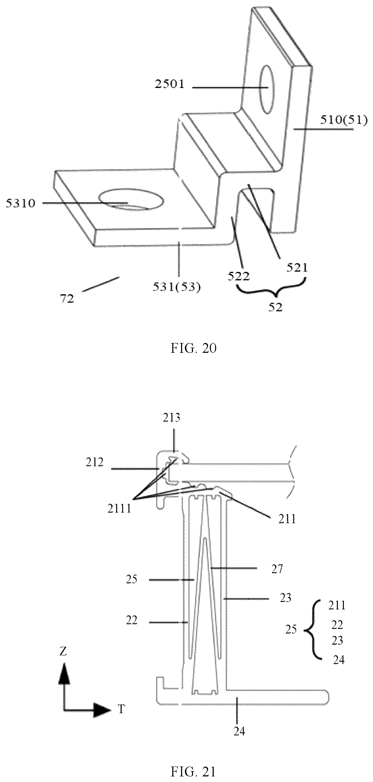

In above embodiments, referring to FIG. 21, a surface of the third clamping portion 213 towards the laminated assembly 1 is provided with an overflow groove 2111. Alternatively, a surface of the second clamping portion 212 towards the laminated assembly 1 is provided with an overflow groove 2111. Alternatively, a surface of the first clamping portion 211 towards the laminated assembly 1 is provided with an overflow groove 2111. By providing with the overflow groove 2111, the volume of the structure adhesive between the clamping frame 21 and the laminated assembly 1 can be increased as required, facilitating improving connecting stability between the laminated assembly 1 and the frame 2. During a process of filling the structural adhesive between the clamping frame 21 and the laminated assembly 1, the overflow groove 2111 can accommodate a part of the structural adhesive, resulting in minimizing the risk of the structural adhesive overflowing from the first groove 214 and blocking the light receiving surface of the laminated assembly 1, and improving aesthetics of the photovoltaic module.

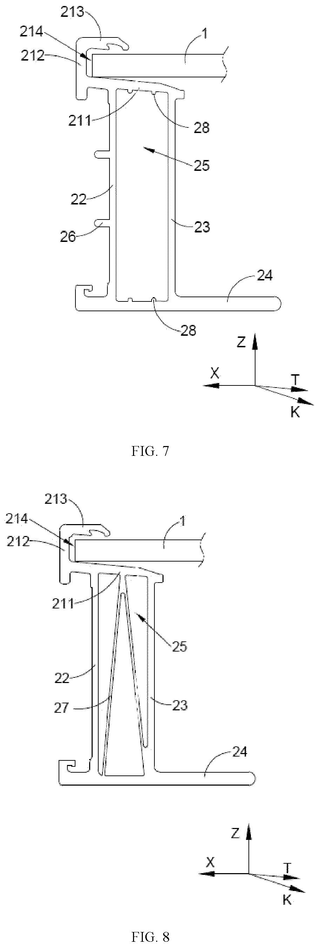

In any one of above embodiments, referring to FIG. 7, the frame 2 further includes an extending portion 26 disposed on the first supporting portion 22. Along the first direction X, the extending portion 26 is located on a side of the first supporting portion 22 away from the second supporting portion 23. The number of the extending portion 26 is one. Alternatively, a plurality of extending portions 26 are arranged at interval along the thickness direction Z of the laminated assembly 1. The extending portion 26 can improve strength of the first supporting portion 22 and reduce a risk of the first supporting portion 22 being bent and deforming, facilitating prolonging a service life of the frame 2 and improving the working stability of the photovoltaic module.

In an embodiment, the third supporting portion 24 is provided with a mounting hole. An end of a fastener can penetrate through the mounting hole and be fixedly connected to the target object, i.e., the supporting frame can be fixed on the target through the fastener. In a possible design, along the first direction X, the mounting hole is located between the first supporting portion 22 and the second supporting portion 23, i.e., along the thickness direction Z of the laminated assembly 1, the cavity 25 can be in communication with the external environment via the mounting hole, a part of the fastener is located in the cavity 25. The mounting hole can serve as a drainage hole, i.e., the water accumulation of the cavity can be discharged to the external environment via the mounting hole. Alternatively, a part of the third supporting portion 24 is located on a side of the second supporting portion 23 away from the first supporting portion 22, i.e., the second supporting portion 23 is disposed between the first supporting portion 22 and the fastener, resulting in increasing a mounting space of the fastener and reducing difficulty of mounting the laminated assembly 1.

In any one of above embodiments, referring to FIGs. 5, 6, 7 and 9, the first clamping portion 211 and/or the third supporting portion 24 is provided with a reinforcing rib 28, and the reinforcing rib 28 is located in the cavity 25, thereby reducing a risk of the first clamping portion 211 and/or the third supporting portion 24 suffering from the external force to deform towards the cavity 25, resulting in prolonging the service life of the frame 2. Referring to FIGs. 5 to 7, along the first direction X, the reinforcing rib 28 can be disposed in a middle of the cavity 25. Referring to FIG. 9, the reinforcing rib 28 can be disposed on a corner position of the cavity 25, i.e., the reinforcing rib 28 can be disposed on a corner position where the first supporting portion 22 is connected to the first clamping portion 211. Alternatively, the reinforcing rib 28 can be disposed on a corner position where the second supporting portion 23 is connected to the first clamping portion 211. Alternatively, the reinforcing rib 28 can be disposed on a corner position where the second supporting portion 23 is connected to the third supporting portion 24. Alternatively, the reinforcing rib 28 can be disposed on a corner position where the first supporting portion 22 is connected to the third supporting portion 24. In addition, a contour, a shape, a size, and other parameters of adjacent reinforcing ribs 28 can be the same or different. When the reinforcing rib 28 is disposed on the corner position, for example, the reinforcing rib 28 is disposed on the corner position where the first supporting portion 22 is connected to the first clamping portion 211, the reinforcing rib 28 can be integrated with the first supporting portion 22 and the first clamping portion 211, resulting in improving strength of the frame 2.

In any one of above embodiments, referring to FIG. 8, the cavity 25 is provided with a reinforcing frame 27. The reinforcing frame 27 can be parallel to the first supporting portion 22, i.e., the reinforcing frame 27 extends along the thickness direction Z of the laminated assembly 1 and a double-frame shaped structure or a triple-frame shaped structure is defined by the first supporting portion 22, the first clamping portion 211, the second supporting portion 23, the third supporting portion 24 and the reinforcing frame 27 surrounding. Alternatively, the reinforcing frame 27 can be parallel to the third supporting portion 24, i.e., the reinforcing frame 27 extends along the first direction X, and a double-frame shaped structure or a triple-frame shaped structure is defined by the first supporting portion 22, the first clamping portion 211, the second supporting portion 23, the third supporting portion 24 and the reinforcing frame 27. Alternatively, the cavity 25 is provided with at least two reinforcing frames 27 parallel to each other, the first supporting portion 22, the first clamping portion 211, a four-frame stacked shaped structure is defined by the first supporting portion 22, the first clamping portion 211, the second supporting portion 23, the third supporting portion 24 and the two reinforcing frames 27. Alternatively, the cavity 25 is provided with at least two reinforcing frames 27 intersecting and not perpendicular to each other 27, and the two adjacent reinforcing frames 27 are V-shaped and X-shaped. The above are all examples of the structure of the reinforced frame 27. The number, placement, connection position, shape, etc. of the reinforced frame 27 are not specifically limited in the present application.

In any one of above embodiment, a size of the frame 2 along the first direction X is in a range of 20 mm to 35 mm, such as 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, 35 mm and so on. A first frame is defined by the frame 2 sleeved on the longer side of the laminated assembly 1. A second frame is defined by the frame 2 sleeved on the shorter side of the laminated assembly 1. A size of the first frame along the first direction X and a size of the second frame along the first direction X can be the same or different. The size of the first frame along the first direction X is greater than the size of the second size of the second frame 2 along the first direction X, facilitating mounting the laminated assembly 1.

In any one of above embodiment, a size of the frame 2 along the thickness direction of the laminated assembly 1 can be in a range of 30 mm to 50 mm, such as 30 mm, 31 mm, 32 mm, 33 mm, 34 mm, 35 mm, 36 mm, 37 mm, 38 mm, 39 mm, 40 mm, 41 mm, 42 mm, 43 mm, 44 mm, 45 mm, 46 mm, 47 mm, 48 mm, 49 mm, 50 mm and so on.

In any one of above embodiments, a size of the photovoltaic module along the first direction X can be in a range of 900 mm to 1200 mm, such as 900 mm, 920 mm, 940 mm, 960 mm, 980 mm, 1000 mm, 1020 mm, 1032 mm, 1035 mm, 1039 mm, 1040 mm, 1060 mm, 1080 mm, 1100 mm, 1120 mm, 1140 mm, 1160 mm, 1180 mm, 1200 mm and so on. A size of the photovoltaic module along the second direction Y can be in a range of 1700 mm to 2200 mm, such as 1700 mm, 1720 mm, 1740 mm, 1760 mm, 1780 mm, 1787 mm, 1800 mm, 1820 mm, 1840 mm, 1860 mm, 1872 mm, 1880 mm, 1900 mm, 1920 mm, 1940 mm, 1960 mm, 1980 mm, 2000 mm, 2020 mm, 2040 mm, 2047 mm, 2060 mm, 2080 mm, 2100 mm, 2120 mm, 2140 mm, 2160 mm, 2180 mm, 2200 mm and so on. It does not specially limit the size of the photovoltaic module along the first direction X and the second direction Y in the present application. When the size of the photovoltaic module along the first direction is relative small, the number of the solar cell 13 disposed on the first direction X can be reduced. When the size of the photovoltaic module along the first direction is relative large, the number of the solar cell 13 disposed on the first direction X can be reduced in a limited mounting space. Therefore, the output power of the photovoltaic module is reduced. When the size of the photovoltaic module along the first direction is relative small, the number of the solar cell 13 disposed on the first direction Y can be reduced. When the size of the photovoltaic module along the first direction is relative large, the number of the solar cell 13 disposed on the first direction Y can be reduced in a limited mounting space. Therefore, the output power of the photovoltaic module is reduced. Therefore, the size of the photovoltaic module along the first direction X can be in a range of 900 mm to 1200 mm, and the size of the photovoltaic module along the first direction Y can be in a range of 1700 mm to 2200 mm, such that the number of the solar cell 13 disposed along the first direction X and the second direction Y can increase, facilitating increasing the number of the photovoltaic module disposed along the first direction X and the second direction Y in the limited mounting space, and improving total output power of the photovoltaic module.

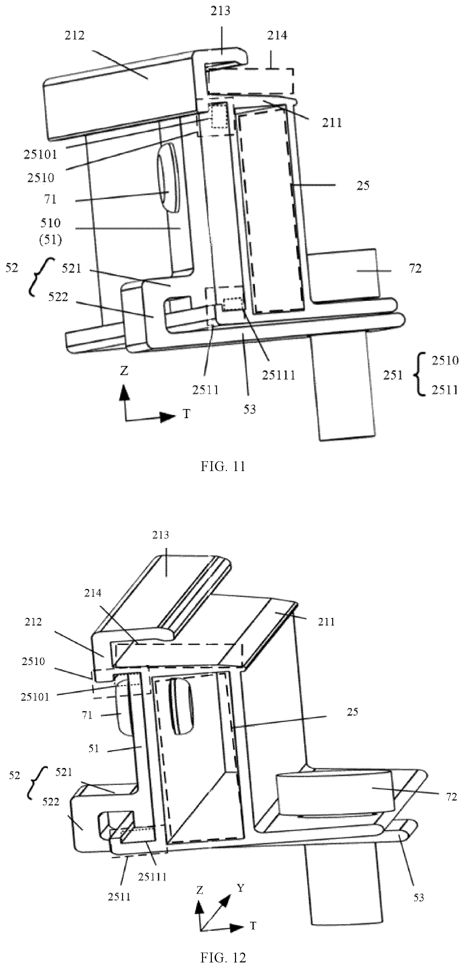

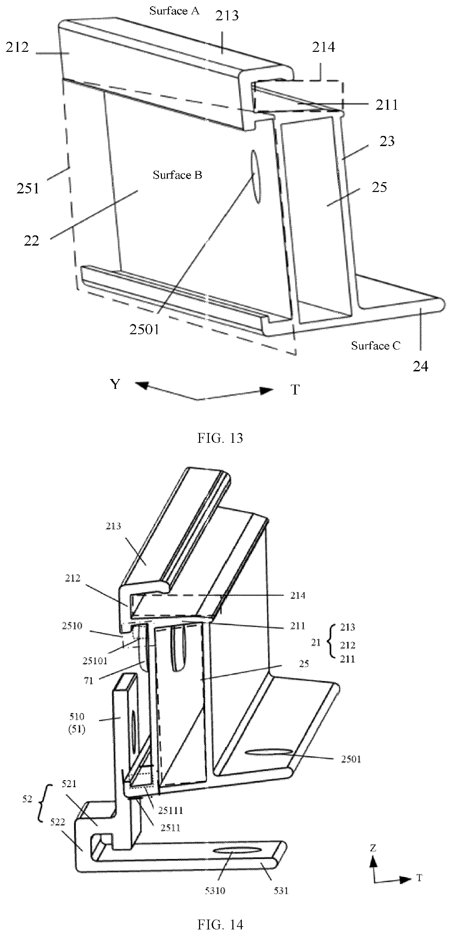

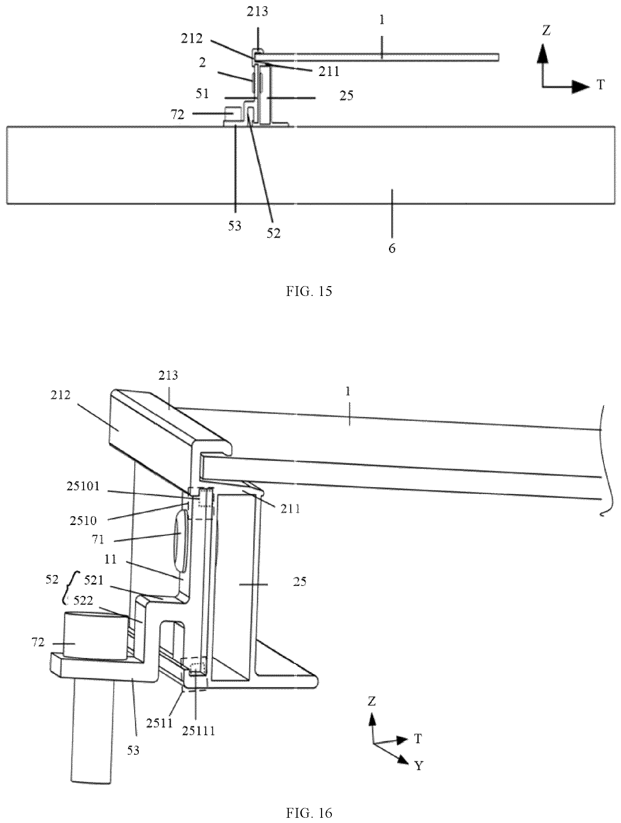

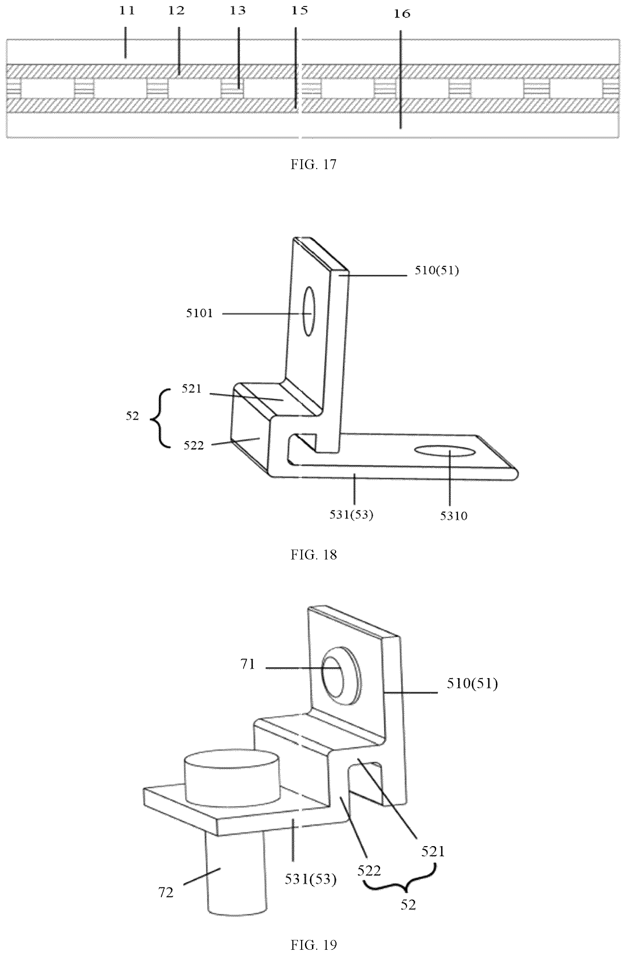

In some embodiment, referring to FIGs. 10 to 17, FIG. 10 is a schematic diagram of a photovoltaic module mounting structure in the present application. FIG. 11 is another schematic diagram of a frame and a fixing assembly being assembled along a direction. FIG. 12 is another schematic diagram of a photovoltaic module and a fixing assembly being assembled along another direction in the present application. FIG. 13 is another schematic diagram of a frame in the present application. FIG. 14 is an exploded view of a frame and a fixing assembly in the present application. FIG. 15 is a schematic diagram of another photovoltaic module mounting structure in the present application. FIG. 16 is a schematic diagram of another frame, another laminated assembly and another fixing portion being assembled in the present application. FIG. 17 is a schematic diagram of a laminated assembly in the present application. The present embodiment further provides a photovoltaic module mounting structure, the photovoltaic module mounting structure provides a fixing assembly 5. An outer surface wall of the cavity 25 is provided with a snapping portion 251. The snapping portion 251 and the cavity 25 are sequentially arranged along an opening direction T of the first groove 214. The fixing assembly 5 includes an inserting portion 51 connected to the snapping portion 251. The fixing assembly 5 further includes a connecting portion 52 and a fixing portion 53. The inserting portion 52 is connected to the fixing portion 53 via the connecting portion 52. The fixing portion 53 is configured to fix an bracket 6.

Referring to FIGs. 10 and 17, the frame 2 is disposed around the laminated assembly 1 to provide protection for the laminated assembly 1. In addition, after the laminated assembly 1 being encapsulated by the frame 2, the frame 2 can be tightly fastened on the bracket 6 by the fixing assembly 5, such that the laminated assembly 1 is smoothly fixed by the frame 2. The bracket 6 can be mounted on a roof or ground, which is not limited herein. The fixing assembly 5 can be configured to fix the bracket 6, prevent the bracket 6 from moving, and ensure that the photovoltaic module is stably mounted. The frame 2 can include a surface A, a surface B, and a surface C. The surface A is a side towards the first groove configured to accommodate the laminated assembly 1. The surface A and the surface B can be an outer side surface of the frame 2, i.e., the surface A and the surface B are generally exposed on external environment, the surface C is configured to attach with and is connected to the bracket 6. The frame 2 can be made of lightweight aluminum alloy material to reduce load of the bracket 6. In order to enable the frame 2 to have sufficient structural strength to better carry the laminated assembly 1, the cavity is disposed on the frame 2, such that the second cavity 25 can effectively carry the laminated assembly 1 while reducing a material of the frame 2, resulting in reducing the cost of the frame 2.

In some embodiments, the frame 2 includes a clamping frame 21 and a cavity 25. The clamping frame 21 is fixedly connected to the groove 25. The clamping frame 21 is provided with the groove 25 configured to accommodate the laminated assembly 1. The laminated assembly 1 is an assembly configured to play a role in photovoltaic power generation, the laminated assembly 1 can generate electrical energy when being exposed to sunlight, resulting in outputting the electrical energy outward to obtain clean energy.

Alternatively, the clamping frame 21 can be integrated with the cavity 25, not only it can ensure stability of the frame, but it can also save assembly time and then improve assembly efficiency of the frame 2 and the fixing assembly 5.

In some embodiment, referring to FIG. 17, the laminated assembly 1 includes a first covering plate 11, a first adhesive film 12, a battery string, a second adhesive film 15 and a second covering plate 16 stacked in order. The battery can include a plurality of solar cells connected to each other.

In some embodiments, the snapping portion 251 is located on an outer side of the frame 2. Alternatively, the snapping portion 251 can extend along a length direction Y of the cavity 25, the snapping portion 251 and the cavity 25 are sequentially arranged along the opening direction T of the first groove 214. The fixing assembly 5 includes the inserting portion 51. The inserting portion 51 can be located on a preset position via the snapping portion 251, and then the inserting portion 51 can be fixedly connected to outer sidewall of the frame 2. The inserting portion 51 is connected to the fixing portion 53 via the connecting portion 52. The connecting portion 52 is configured to connect the inserting portion 51 with the fixing portion 53. The connecting portion 52 is connected to the bracket 6 via the connecting portion 53, for example, the connecting portion 52 is fixedly connected to the bracket 6 via the fixing portion 53.

By above embodiments, the present application provided in this embodiment has achieved at least the following beneficial effects: by cooperation between the snapping portion 251 and the inserting portion 51, the inserting portion 51 can be located inside the clamping part 251, making it difficult for the fixed component 5 to detach from the frame 2, thereby improving the installation reliability of the photovoltaic module.

In some embodiments, referring to FIGs. 11 to 13, the clamping frame 21 includes a third clamping portion 213, a second clamping portion 212 and a first clamping portion 211. A first groove 214 is defined between the third clamping portion 213, the second clamping portion 212 and the first clamping portion 211. The opening of the first groove 214 is towards the laminated assembly 1. The cavity 25 can be defined by the first clamping portion 211, the first supporting portion 22, the third supporting portion 235 and the second supporting portion 23. The snapping portion 251 is located on a side of the first supporting portion 22 away from the second supporting portion 23, and then the inserting portion 51 is connected to the first supporting portion 22 via the snapping portion 251, for example, the inserting portion 51 is fixedly connected to the first supporting portion 22 via the snapping portion 251. The first clamping portion 211 can be a shared structure between the first groove 214 and the cavity 25.

Alternatively, along a direction Z from the clamping frame 21 to the cavity 25, an orthographic projection 510 of the snapping block is located in an orthographic projection 510 of the first groove 214, such that the snapping block 510 of the fixing assembly 5 is located blow the A surface of the frame 2, facilitating improving power generation of the photovoltaic module.

Alternatively, the first clamping portion 211 is an inclined surface. For example. The first clamping portion 211 is inclined away from the first groove 214, a space between the third clamping portion 213 and the first clamping portion 211 gradually increases, then facilitating inserting the laminated assembly 1 into the first groove 214.

In some embodiments, the snapping portion 251 includes a first snapping component 2510 and a second snapping component 2511 opposite to each other. The first snapping component 2510 is disposed on a side of the second snapping component 2511 towards the first groove 214. The inserting portion 51 includes a snapping block 510. The snapping block 510 is snapped between the first snapping component 2510 and the second snapping component 510.

Referring to FIG.s. 11, 12, 13 and16, the snapping portion 251 includes a first snapping component 2510 and a second snapping component 2511. The first snapping component 2510 and the second snapping component 2511 are disposed opposite to each other. The first snapping component 2510 are disposed towards the first groove 214. The second snapping component 2511 is disposed towards the bracket 6. Along the direction Z from the clamping frame 21 to the first groove 25, a section of the first snapping component 2510 is approximately inverted L-shaped, and a section of the second snapping component 2511 is approximately L-shaped. The inserting portion 51 includes the snapping block 510. The snapping block 510 can be a rectangular board. The snapping block 510 is snapped between the first snapping component 2510 and the second snapping component 2511, for example, a side of the snapping block 510 towards the first groove 214 is snapped in the first snapping component 2510. A side of the snapping block 510 towards the bracket 6 is snapped in the second snapping component 2511. The snapping block 510 is capable of sliding to a preset position via the first snapping component 2510 and the second snapping component 2511, such that the second snapping component 510 are fixedly connected to the frame 2, and whether the snapping block 510 is pressed or pulled, the fixing assembly 5 is difficult to be detached from the frame 2. In the present embodiment, the snapping portion 510 is only required to be disposed on the surface B of the frame 2.

Alternatively, referring to FIGs. 11, 12, 13 and 16, the first snapping component 2510 and the second snapping component 2511 both penetrates through the snapping portion 251 along the length direction Y of the cavity 25. During subsequent assembly, the snapping portion 510 can move back and forth along the length direction Y of the cavity 25 between the first snapping component 2510 and the second snapping component 2511. The snapping block 510 is fixed on an outer sidewall of the frame 2 according to a preset position between the fixing assembly 5 and the frame 2. By such arrangement, it is conducive to mounting the fixing assembly 5 on the frame 2, an operation for mounting the fixing assembly 5 is convenient, a detachment for the fixing assembly 5 is convenient. Since the first snapping component 2510 and the second snapping component 2511 both penetrates through the length direction of the cavity 25, the snapping block 510 can slide to the preset position through the first snapping component 2510 and the second snapping component 2511, which not only improves convenience of mounting the fixing assembly 5 on the frame 2, but also significantly saves time for the fixing assembly 5 to be assembled on the frame 2.

In an alternative embodiment, referring to FIG. 11, 12 and 16, the first snapping component 2510 is provided with a second snapping component 25101. The second groove 25101 is recessed towards the first groove 214. The second groove 25101 can penetrate through the first snapping component 2510 along the length direction Y of the cavity 25. The second snapping portion 2511 is provided with a third clamping portion 25111. The third clamping portion 25111 is recessed away from the first groove 214. The third groove 25111 penetrates through the length direction Y of the cavity 25. The second groove 25101 and the third groove 25111 are disposed opposite to each other. Alternatively, The second groove 25101 and the third groove 25111 are arranged in mirror symmetry. For example, along the direction Z from the clamping frame 21 to the first groove 25, the section of the first groove is in an inverted L shape, and the section of the second groove 25101 is L shape. Two ends of the snapping block 510 are snapped with the second groove 25101 and the third groove 25111, respectively. For example, one end of the snapping block 510 is snapped in the second groove 25101, and the other end of the snapping block 510 is snapped in the third groove 25111, the snapping block 510 is snapped with the first snapping component 2510 and the second snapping component 2511 via the second groove 25101 and the third groove 25111, and the snapping block 510 can be reciprocated between the second groove 25101 and the third groove 25111 according to the preset position between the fixing assembly 5 and the frame 2.

The snapping block 510 is directly fixed on an outer sidewall of the frame 2. The snapping block 510 can be inserted between the first groove 214 and the second groove 25101. The snapping block 510 can slide to the preset position between the fixing assembly 5 and the frame 2, such that the snapping block 510 is connected to the frame 2, and the snapping block 510 is fixedly connected to the bracket 6 via the fixing assembly 53.

In an alternative embodiment, referring to FIGs. 11, 16, 18, 19 and 20, FIG. 18 is a schematic diagram of another fixing assembly in the present application. FIG. 19 is a schematic diagram of another fixing assembly in the present application. FIG. 20 is a schematic diagram of another fixing assembly hiding a first connecting component and a second connecting component in the present application. In the present embodiment, the snapping block 510 is provided with a first hole 5101, the first hole 5101 penetrates through the snapping block 510 along the opening direction T of the first groove 214, an outer sidewall of the cavity 25 is provided with a second hole 2501 corresponding to the first hole 5101. The second hole penetrates through the outer sidewall of the cavity 25 along the opening direction T of the first groove 214. The first hole 5101 and the second hole 2501 can be a circle hole, which is conducive to process the first hole 5101 and the second hole 2501. Alternatively, the first hole 5101 can be designed as other shape, which is not limited herein. The snapping block 510 is connected to an outer sidewall of the cavity 25 via the first connecting component 71. For example, the snapping block 510 is fixedly connected to the outer sidewall of the cavity 25 via the first connecting component 71, the first connecting component 71 can be a fastener, the fastener can be a rivet, during subsequent assembly, the rivet penetrates through the first hole 5101 and the second hole 2501, such that the snapping block 510 is fixedly connected to the outer sidewall of the cavity 25, the overall mounting process is convenient and fast.

In an alternative embodiment, referring to FIGs. 11, 12 and 16, the connecting portion 52 is located on a side of the snapping block 510 away from the first groove 214. The connecting portion 52 can be disposed on a middle and lower part of the snapping block 510 away from the cavity 25. Along the direction Z from the clamping frame 1 towards the first groove 25, the section of the connecting portion 52 is the inverted L shape. By such arrangement, a material of the connecting portion 52 can be saved, a cost is reduced, and is is conducive to connecting the connecting portion 52 with the fixing portion 53.

Alternatively, referring to FIGs. 11, 12 and 16, the snapping block 510 is connected to the outer sidewall of the cavity 25 via the first connecting component 71. Along the opening direction T of the first groove 214, an orthographic projection of the first connecting component 71 does not overlap with an orthographic projection of the connecting portion 52. During subsequent assembly, whether the snapping block 51 is pressed or pulled, the fixing assembly 5 is difficult to be detached form the frame 2, which may not affect that the snapping block 510 is fixed with the frame 2 by the first connecting component 71, thereby improving connecting stability between the fixing assembly 5 and the frame 2.

Alternatively, referring to FIGs. 10 and 13, along the direction Z from the clamping frame 21 towards the cavity 25, a side of the second clamping portion 212 away from the first groove 214 is align with a side of the first connecting component 71 away from the cavity 2. After the snapping block 510 inserting between the first snapping component 2510 and the second snapping component 2511, the snapping block 510 slides to the preset position between the snapping block 510 and the first supporting portion 22, thereby preventing the first connecting component 71 and the snapping portion 251 from occupying too large space of the frame 2, and facilitating assembly among the fixing assembly 5, the frame 2 and the bracket 6. In an alternative embodiment, referring to FIGs. 10, 11 and 12, along the direction Z from the clamping frame 21 to the cavity 25, an orthographic projection of the connecting portion 52, an orthographic projection of the snapping block 510, and an orthographic projection of a part of the laminated assembly 1 all overlap with an orthographic projection of the fixing portion 53. The fixing portion 53 can be a rectangular plate. A side of the fixing portion 53 towards the bracket 6 can be directly in contact with a side of the bracket 6 towards the fixing portion 53. The fixing portion 53 can be located downward a bottom wall of the cavity 25. During subsequent assembly, a bottom wall of the frame 2, the fixing portion 53 and the bracket 6 can be fixed to each other, a fixing position between the fixing assembly 5 and the frame 2 is located on a side of the bottom wall of the frame away from the frame 2, such that a space between the two adjacent laminated assemblies 1 is reduced, thereby reducing mounting gap between two adjacent photovoltaic modules, and ensuring the fixing assembly 5 to surround and fix three surface of the frame 2 (such as an outer sidewall, a bottom wall, and an inner sidewall of the frame 2), effectively improving the installation reliability of photovoltaic module.

In an alternative embodiment, referring to FIGs. 11, 12 and 18, in the present embodiment, the connecting portion 52 includes a transverse plate 521 and a vertical plate 522 connected to the transverse plate 521. For example, a side of the transverse plate 521 away from the cavity 25 is fixedly connected to a side of the vertical plate 522 towards the transverse plate 521. The transverse plate 521 and the vertical plate 522 can both be a rectangular plate. The transverse plate 521 and the vertical plate 522 can be a strip-shaped rectangular plate. An inverted L shape is defined by the transverse plate 521 and the vertical plate 522. The transverse plate 521 is connected to a side of the snapping block 510 away from the cavity 25. The vertical plate 522 is connected to an end of the fixing portion 53. For example, a side of the transverse plate 521 towards the cavity 25 is fixedly connected to a side of the fixing portion 53 towards the vertical plate 522, the fixing portion 53 extends towards the bottom wall of the cavity 25. The snapping block 510 is snapped on an outer sidewall of the frame 2. The fixing portion 53 is disposed on the bottom wall of the frame 2, and then the second connecting component 71 is disposed on the inner sidewall of the frame 2, such that the three surfaces of the frame 2 (such as the outer sidewall, the bottom wall, and the inner sidewall of the frame 2) are surrounded and fixed by the fixing assembly 5.

Alternatively, referring to FIGs. 11, 12 and 18, in the present embodiment, the vertical plate 522 and the fixing portion 53 can form a L-shaped structure. Since the transverse plate 521 and the vertical plate 522 can form an inverted L-shaped structure, the snapping block 510 is in contact with an outer sidewall of the frame 2, and the vertical plate 522 and the fixing portion 53 can be designed as the L-shaped structure, the fixing portion 53 can be surround the bottom wall of the frame 2, and the bottom wall of the frame 2 can be fixedly connected to the bracket 6 via the fixing portion 53.

In an alternative embodiment, referring to FIGs. 15, 16, 18 and 19, along the direction Z from the clamping frame 21 to the cavity 25, an orthographic projection of the inserting portion 51, an orthographic projection of the connecting portion 52, an orthographic projection of the laminated assembly 1 does not overlap with the orthographic projection of the fixing portion 53. By such arrangement, it is not required to drill a hole on the bottom wall of frame 2, thus saving one process, and then the fixing portion 53 is fixedly connected to the bracket 6. Since along the direction Z from the clamping frame 21 to the cavity 25, the orthographic projection of the laminated assembly 1 does not overlap with the orthographic projection of the fixing portion 53, facilitating assembling the fixing portion 53 with the bracket 6.

An in alternative embodiment, referring to FIGs. 16, 18 and 19, in the present embodiment, the connecting portion 52 includes a transverse plate 521 and a vertical plate 522 connected to the transverse plate 521. For example, a side of the transverse plate 521 away from the cavity 25 is fixedly connected to a side of the vertical plate 522 towards the transverse plate 521. The transverse plate 521 and the vertical plate 522 can both be a rectangular plate. The transverse plate 521 and the vertical plate 522 can be a strip-shaped rectangular plate. An inverted L shape is defined by the transverse plate 521 and the vertical plate 522. The transverse plate 521 is connected to a side of the snapping block 510 away from the cavity 25. For example, a side of the transverse plate 521 towards the cavity 25 is fixedly connected to a side of the snapping block 510 away from the cavity 25. The vertical plate 522 is connected to an end of the fixing portion 53 towards the cavity 25. A side of the vertical plate 522 away from the transverse plate 521 is fixedly connected to a side of the fixing portion 53 towards the vertical plate 522. The fixing portion 53 extends away from the bottom wall of the cavity 25. Therefore, obstruction of the fixed part 53 by the clamping frame 21 and the cavity 25 can be effectively avoided, facilitating directly assembling the fixing portion 53 with the bracket 6.

In an alternative embodiment, the fixing portion 53 includes a fixing block 531. The fixing block 531 can be a rectangular plate. The fixing block 531 is directly contact with the bracket 6. The fixing block 531 is the rectangular plate, facilitating increasing a contact area between the fixing portion 53 and the bracket 6. The fixing block 531 is provided with a third hole 5310. The third hole 5310 penetrates through the direction from the clamping frame 21 to the cavity 25. The third hole 5310 can be a circle hole, which is conducive to process the third hole 5310. The fixing block 531 is connected to the bracket 6 via the second connecting component 72. The second connecting component 72 can be a fasten suit, such as a bolt suit. The bolt suit includes a bolt and nut connected to the bolt. The bolt can be M8 bolt. The above bolt can be set as required, which is not limited herein. During subsequent assembly, the nut is tighten after the bolt penetrating through the third hole 5310 of the fixing block 531 and the fourth hole of the bracket 6 (not shown in drawings), resulting in realizing assembly between the fixing block 531 and the bracket 6, the overall mounting process is convenient and fast.

Alternatively, referring to FIGs. 18 to 20, the snapping block 510, the connecting portion 52 and the fixing portion 53 can be an integrated structure, not only it can ensure stability of the frame, but it can also save assembly time, and then fixing assembly 5 can be directly assembled onto the snapping portion 251 of the frame 2.

In an alternative embodiment, referring to FIG. 21, FIG. 21 is a schematic diagram of another frame in the present application. The clamping frame 21 includes a third clamping portion 213, a second clamping portion 212 and a first clamping portion. A first groove 214 is formed along the third clamping portion 213, the second clamping portion 212 and the first clamping portion 211. An opening of the first groove 214 is towards the laminated assembly 1. A side of the third clamping portion 213, a side of the second clamping portion 212 and a side of the first clamping portion, which are all located towards the first groove, are each provided with an overflow groove 2111. After the laminated assembly 1 inserting into the first groove 214, the overflow groove 2111 can be configured to accommodate adhesive configured for bonding or other adhesives during a process of subsequent installation and use, resulting in ensuring that the laminated assembly 1 is firmly mounted on the clamping frame 21. The number of the overflow groove 2111 can increase or decrease as required. When the number of the overflow groove 2111 is multiple, a distance between a plurality of overflow grooves can be adjusted as required, which is not limited herein. A shape of the overflow groove 2111 can be semi-circular, trapezoidal, fan-shaped, rectangular and so on, which can be adjusted as required and not limited herein.

Alternatively, referring to FIG. 21, the cavity 25 is provided with a reinforcing frame 27. The reinforcing frame 27 can improve stability of the cavity 25 and overall strength of the frame 2, resulting in improving overall strength of the photovoltaic module.

Alternatively, referring to FIG. 21, along the direction Z from the clamping frame 21 towards the cavity 25, a section of the reinforcing frame 27 can be in an inverted L shape, thereby separating the cavity to three small cavity, and then a plurality of corner brackets (not shown) are inserted into the three cavities respectively, facilitating improving the overall strength of the frame 2. Alternatively, the shape of the reinforcing frame 27 can be in other shapes as required, as long as the overall strength of the frame 2 can be improved, which is not limited herein.

By the above embodiments, it can be seen that the photovoltaic module provided by the present application has achieved at least the following beneficial effects: by cooperation between the snapping portion 251 and the inserting portion 51, the inserting portion 51 can be located inside the clamping part 251, making it difficult for the fixed component 5 to detach from the frame 2, thereby improving the installation reliability of the photovoltaic module.

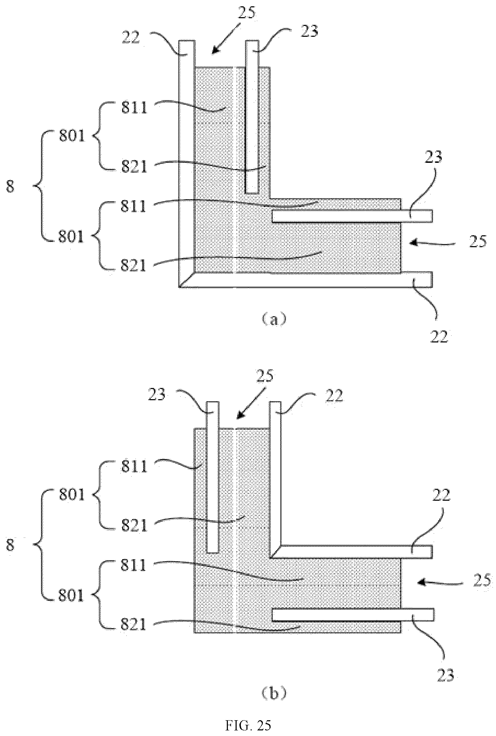

Optionally, it can be seen from the background art that, in the use process of the photovoltaic module, a risk that the frame is separated from the corner bracket easily occurs, thereby reducing use stability of the photovoltaic module. The photovoltaic module provided by an embodiment of the present application includes a frame 2 and a corner bracket 8. A third supporting portion 24, a first supporting portion 22, a first clamping portion 211 and a second supporting portion 23 of the frame 2 are sequentially connected to enclose to form a cavity 25. The corner bracket 8 includes two comer-bracket connecting portions 801 connected in an L shape. Each of the two corner-bracket connecting portions 801 has a first sub-connecting plate 811 and a second sub-connecting plate 821 parallel to each other. And a recess 802 is formed between the first sub-connecting plate 811 and the second sub-connecting plate 821. One of the first sub-connecting plate 811 and the second sub-connecting plate 821 of the corner bracket 8 is located in the cavity 25, the other one of the first sub-connecting plate 811 and the second sub-connecting plate 821 is located outside of the cavity 25. Such that, a friction force may be generated between a surface of the first supporting portion 22 towards the cavity 25 and the corner-bracket connecting portions 801 and between a surface of the second supporting portion 23 towards the cavity 25 and the corner-bracket connecting portions 801. Referring to (a) of FIG. 25, when the first supporting portion 22 is located in the recess 802, a friction force may be generated between a surface of the first supporting portion 22 away from the second supporting portion 23 and the first sub-connecting plate 811. Alternatively, referring to (b) of FIG. 25, when the second supporting portion 23 is located in the recess 802, a friction force may be generated between a surface of the second supporting portion 23 away from the first supporting portion 22 and the second sub-connecting plate 821. That is to say, when the corner connector 8 is assembled into the cavity 25, at least three contact surfaces between the corner bracket 8 and the frame 2 may generate a friction force. Compared with the corner-bracket connecting portion 801 is integrally arranged in the cavity 25, at least one contact surface is added between the corner bracket 8 and the frame 2, which is beneficial to improving assembly stability of the corner bracket 8 and the frame 2. In the use process of the photovoltaic module, the first sub-connecting plate 811 or the second sub-connecting plate 821 located in the cavity 25 may have a problem of dimensional deviation due to wear, so that mounting stability of the first sub-connecting plate 811 or the second sub-connecting plate 821 in the cavity 25 may be reduced. However, due to the fact that the recess 802 of the corner bracket 8 can restrict the movement of the first supporting portion 22 or the second supporting portion 23, the recess 802 can make up for the size deviation of the first sub-connecting plate 811 or the second sub-connecting plate 821, and stabilize a relative position of the corner bracket 8 and the frame 2, thereby avoiding the problem that the corner bracket 8 directly falls off from the frame 2, thereby facilitating improving stability of the photovoltaic module in use.

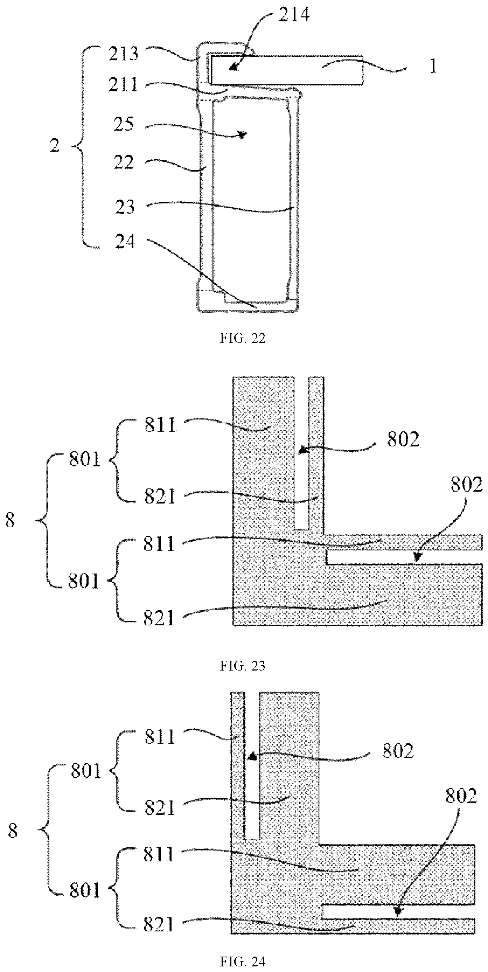

FIG. 22 is a schematic structural diagram of a frame in a first style according to an embodiment of the present application. FIG. 23 is a top view of a corner bracket according to an embodiment of the present application. FIG. 24 is a top view of a corner bracket according to another embodiment of the present application. FIG. 25 is a cross-sectional schematic view of two types of frames assembling with a corner bracket along a horizontal direction of an embodiment in the present application.

Referring to FIG. 22, a photovoltaic module in another embodiment includes a frame 2. The frame 2 includes a first clamping portion 211, a first supporting portion 22, a second supporting portion 23 and a third supporting portion 24. The first clamping portion 211 and the third supporting portion24 are both arranged in a horizontal direction. The first clamping portion 211 is located above the third supporting portion 24. The first supporting portion 22 and the second supporting portion 23 are both arranged in a vertical direction. The first supporting portion 22 and the second supporting portion 23 are both located between the first clamping portion 211 and the third supporting portion 24. The third supporting portion 24, the first supporting portion 22, the first clamping portion 211 and the second supporting portion 23 are sequentially connected to enclose to form the cavity 25. Referring to FIG. 23 and FIG. 24, the photovoltaic module further includes a corner bracket 8. The corner bracket 8 includes two corner-bracket connecting portions 801 connected in L shaped. Each of the two corner-bracket connecting portions 801 includes a first sub-connecting plate 811 and a second sub-connecting plate 821 parallel to each other. A recess 802 is formed between the first sub-connecting plate 811 and the second sub-connecting plate 821. Referring to (a) of FIG. 25, the first sub-connecting plate 811 can be located in the cavity 25, the second supporting portion 23 can be located in the recess 802, and the second sub-connecting plate 821 can be located on a side of the second supporting portion 23 away from the first supporting portion 22. Alternatively, referring to (b) of FIG. 25, the second sub-connecting plate 821 can be located in the cavity 25, the first supporting portion 22 can be located in the recess 802, and the first sub-connecting plate 811 can be located on a side of the first supporting portion 22 away from the second supporting portion 23.

In some embodiments, the width of the recess 802 may be less than or equal to a thickness of the first supporting portion 22. In this way, referring to (b) of FIG. 25 , when the second sub-connecting plate 821 is located in the cavity 25, the first supporting portion 22 may be located in the recess 802. The recess 802 may generate a clamping force on the first supporting portion 22, so as to improve the assembly stability of the frame 2 and the corner bracket 8, thereby facilitating improving stability of the photovoltaic module in use.

In some embodiments, the width of the recess 802 may be less than or equal to a thickness of the second supporting portion 23. In this way, referring to (a) of FIG. 25, when the first sub-connecting plate 811 is located in the cavity 25, the second supporting portion 23 may be located in the recess 802. The recess 802 may generate a clamping force on the second supporting portion 23, so as to improve assembly stability of the frame 2 and the corner bracket 8, thereby facilitating improving stability of the photovoltaic module in use.

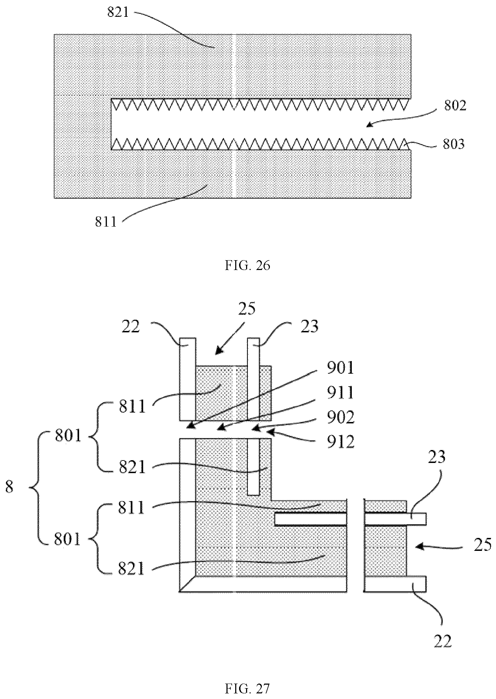

FIG. 26 is an partial enlarged view of a recess of an embodiment in the present application.

In some embodiments, referring to FIG. 26, a surface of the first sub-connecting plate 811 towards the recess 802 and/or a surface of the second sub-connecting plate 821 towards the recess 802 can have a snapping structure 803. When the first supporting portion 22 is disposed in the recess 802, a friction force between the first supporting portion 22 and the first sub-connecting plate 811 and/or a friction force between the first supporting portion 22 and the second sub-connecting plate 821 may be increased, thereby facilitating improving assembly stability between the frame 2 and the corner bracket 8, and further improving stability of the photovoltaic module in use. Alternatively, when the second supporting portion 23 is disposed in the recess 802, a friction force between the second supporting portion 23 and the first sub-connecting plate 811 or a friction force between the second supporting portion 23 and the second sub-connecting plate 821 may be increased, thereby facilitating improving assembly stability between the frame 2 and the corner bracket 8, thereby facilitating improving stability of the photovoltaic module in use.

For example, the snapping structure 803 may be a plurality of sequentially arranged sawtooth-shaped structures or convex structures in other shapes. Referring to FIG. 26, the snapping structure is disposed on a surface of the first sub-connecting plate 811 facing the recess 802 and a surface of the second sub-connecting plate 821 facing the recess 802. Alternatively, in other embodiments, the snapping structure 803 may be only located on the surface of the first sub-connecting plate 811 facing the recess 802, or the snapping structure 803 may be only located on the surface of the second sub-connecting plate 821 facing the recess 802.

In some embodiments, when the first sub-connecting plate 811 is disposed in the cavity 25, a surface of the first sub-connecting plate 811 away from the second sub-connecting plate 821 may also be provided with a snapping structure. In this way, a friction force between the first sub-connecting plate 811 and an inner wall of the cavity 25 can be increased, thereby facilitating improving assembly stability between the frame 2 and the corner bracket 8, and further improving stability of the photovoltaic module in use.

In some embodiments, when the second sub-connecting plate 821 is disposed in the cavity 25, a surface of the second sub-connecting plate 821 away from the first sub-connecting plate 811 may also be provided with a snapping structure. In this way, the friction force between the second sub-connecting plate 821 and the inner wall of the cavity 25 can be increased, thereby facilitating improving assembly stability between the frame 2 and the corner bracket 8, and further improving stability of the photovoltaic module in use.

FIG. 27 is a cross-sectional schematic view of a corner bracket 8 and a frame 2 being assembled along a horizontal direction in an embodiment of the present application.

In some embodiments, the first sub-connecting plate 811 may have a first through hole 911. The second sub-connecting plate 821 may have a second through hole 912. The first supporting portion 22 has a first mounting hole 901. The second supporting portion 23 has a second mounting hole 902. The first through hole 911, the second through hole 912, the first mounting hole 901 and the second mounting hole 902 are in communication with each other. In this way, a bolt can sequentially penetrate through the first mounting hole 901, the first through hole 911, the second mounting hole 902 and the second through hole 912, so that the corner bracket 8 can be fixed to the frame 2, thereby improving the assembly stability of the corner bracket 8 and the frame 2, thereby facilitating prolonging service life of the photovoltaic module.

Referring to FIG. 27, in one embodiment, the first sub-connecting plate 811 is disposed in the cavity 25, and the second supporting portion 23 is disposed in the recess 802, and the first mounting hole 901, the first through hole 911, the second mounting hole 902 and the second through hole 912 are sequentially in communication with each other. In some embodiments, the second sub-connecting plate 821 is disposed in the cavity 25, and the first supporting portion 22 is disposed in the recess 802, and the first through hole 911, the first mounting hole 901, the second through hole 912, and the second mounting hole 902 are sequentially arranged and in communication with each other.

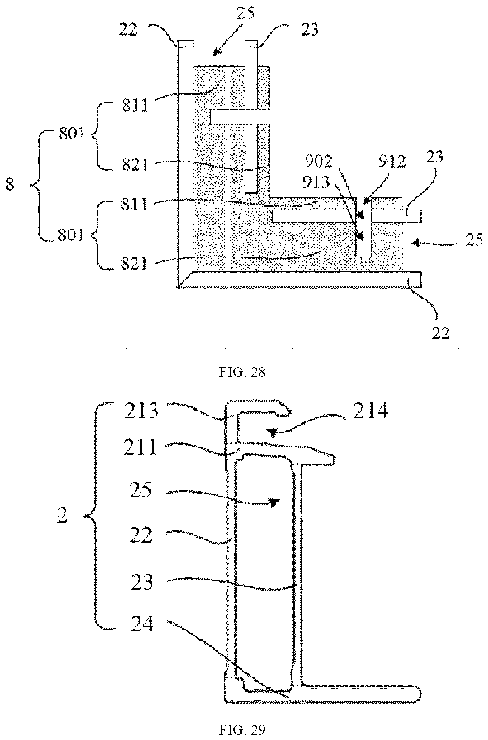

FIG. 28 is a cross-sectional schematic view of a corner connector 8 being assembled with a frame 2 along a horizontal direction according to an embodiment of the present application.

In some embodiments, referring to FIG. 28, the first sub-connecting plate 811 is disposed in the cavity 25, and the second supporting portion 23 is disposed in the recess 802. The first sub-connecting plate 811 can have a first blind hole 913. The second sub-connecting plate 821 can have a second through hole 912. The second supporting portion 23 can have a second mounting hole 902. The second through hole 912, the second mounting hole 902 and the first blind hole 913 are successively in communication with each other. Inner walls of the second through hole 912, the second mounting hole 902 and the first blind hole 913 are provided with threads. In this way, a bolt coupled to the threads sequentially penetrates through the second through hole 912, the second mounting hole 902 and the first blind hole 913, to fix the corner bracket 8 and the frame 2.

In some embodiments, when the second sub-connecting plate 821 is disposed in the cavity 25 and the first supporting portion 22 is disposed in the recess 802, the second sub-connecting plate 821 can be provided with a second blind hole (not labeled). The first sub-connecting plate 811can be provided with a first through hole 911. The first supporting portion 22 can be provided with a first mounting hole 901. The first through hole 912, the first mounting hole 901, and the second blind hole are sequentially in communication with each other. Inner walls of the first through hole 911, the first mounting hole 901, and the second blind hole are provided with threads. In this way, a bolt couples to the threads sequentially penetrates through the first through hole 911, the first mounting hole 901 and the second blind hole to fix the corner bracket 8 and the frame 2.

In some embodiments, one corner-bracket connecting portion 801 of the corner bracket 8 may be installed with the corresponding frame 2 as shown in FIG. 27, and the other corner-bracket connecting portion 801 of the corner 8 may be installed with the corresponding frame 2 as shown in FIG. 28.

FIG. 29 is a schematic diagram of a frame 2 in a second style according to an embodiment of the present application.

In some embodiments, referring to FIG. 29, a connection point between the first supporting portion 22 and the first clamping portion 211 is defined as a first connection point. A connection point between the second supporting portion 23 and the first clamping portion 211 is defined as a second connection point. A distance between an end of the first clamping portion 211 away from the first supporting portion 22 relative to the second supporting portion 23 and the first connection point is greater than a distance between the second connection point and the first connection point. A connection point between the first supporting portion 22 and the third supporting portion 24 is defined as a third connection point. A connection point between the second supporting portion 23 and the third supporting portion 24 is defined as a fourth connection point. A distance between an end of the third supporting portion 24 away from the first supporting portion 22 relative to the second supporting portion 23 and the third connection point is greater than a distance between the fourth connection point and the third connection point.

That is, the end of the first clamping portion 211 away from the first supporting portion 22 relative to the second supporting portion 23 protrudes from a surface of a side of the second supporting portion 23 away from the first supporting portion 22. The end of the third supporting portion 24 away from the first supporting portion 22 relative to the second supporting portion 23 protrudes from a surface of a side of the second supporting portion 23 away from the first supporting portion 22. In this way, when the first sub-connecting plate 811 is located in the cavity 25 and the second supporting portion 23 is located in the recess 802, the second sub-connecting plate 821 can be located on the side of the second supporting portion 23 away from the first supporting portion 22, and an upper end and a lower end of the second sub-connecting plate 821 can be clamped between the first clamping portion 211 and the third supporting portion 24. Thereby, relative positions of the corner bracket 8 and the frame 2 can be further fixed, improving assembly stability of the photovoltaic module and stability of the photovoltaic module in use.

In some embodiments, the end of the first clamping portion 211 away from the first supporting portion 22 relative to the second supporting portion 23 protrudes from the surface of the side of the second supporting portion 23 away from the first supporting portion 22, the end of the first clamping portion 211 away from the first supporting portion 22 relative to the second supporting portion 23 can be also bent towards the third supporting portion 24. In this way, when the first sub-connecting plate 811 is located in the cavity 25 and the second sub-connecting plate 821 is located on the side of the second supporting portion 23 away from the first supporting portion 22, the second sub-connecting plate 821 can be clamped between the first clamping portion 211 and the third supporting portion 24, thereby further improving assembly stability of the corner bracket 8 and the frame 2.

It should be noted that, referring to FIG. 29, a width of the third supporting portion 24 is greater than a width of the first clamping portion 211. The width of the third supporting portion 24 is wider, which may help to improve the stability of the frame 2 in the horizontal direction and avoid a problem of toppling of the frame 2. In some embodiments, the width of the third supporting portion 24 can be equal to the width of the first clamping portion 211.

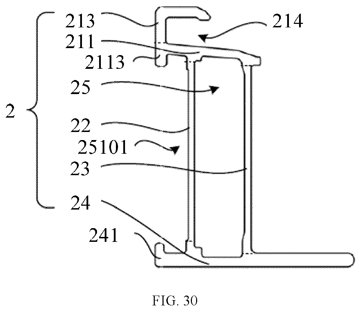

FIG. 30 is a schematic structural diagram of a frame 2 in a third style according to an embodiment of the present application.

In some embodiments, referring to FIG. 30, an end of the third supporting portion 24 away from the second supporting portion 23 relative to the first supporting portion 22 is bent towards the first clamping portion 211 to form a first bending portion 241. An end of the first clamping portion 211 away from the second supporting portion 23 relative to the first supporting portion 22 is bent towards the third supporting portion 24 to form a second bending portion 2113. The first bending portion 241, the first supporting portion 22 and the second bending portion 2113 enclose to form a second groove 25101.

In this way, when the second sub-connecting plate 821 is located in the cavity 25 and the first supporting portion 22 is located in the recess 802, the first sub-connecting plate 811 is located on a side of the first supporting portion 22 away from the second supporting portion 23, and the first sub-connecting plate 811 can be clamped in the first snapping component 2510, so as to stabilize relative positions of the corner bracket 8 and the frame 2, and improve assembly stability of the photovoltaic module and further stability of the photovoltaic module in use.

In some embodiments, along a direction perpendicular to a surface of the first supporting portion 22, a depth of the second groove 25101 is less than or equal to a thickness of the first sub-connecting plate 811. In this way, the first sub-connecting plate 811 can be clamped in the second groove 25101.

In some embodiments, when the frame 2 is provided with the second groove 25101, the first sub-connecting plate 811 can also be installed in the cavity 25, the second supporting portion 23 can be located in the recess 802, and the second sub-connecting plate 821 can be located on a side of the second supporting portion 23 away from the first supporting portion 22.

It should be noted that, referring to FIG. 30, an end of the third supporting portion 24 away from the first supporting portion 22 relative to the second supporting portion 23 protrudes from a surface of a side of the second supporting portion 23 away from the first supporting portion 22. Such that a width of the third supporting portion 24 can be wider, the stability of the frame 2 in the horizontal direction can be improved, and the problem of toppling of the frame 2 can be avoided.

In some embodiments, the end of the third supporting portion 24 away from the first supporting portion 22 relative to the second supporting portion 23 may be flush with the surface of the second supporting portion 23 away from the first supporting portion 22.

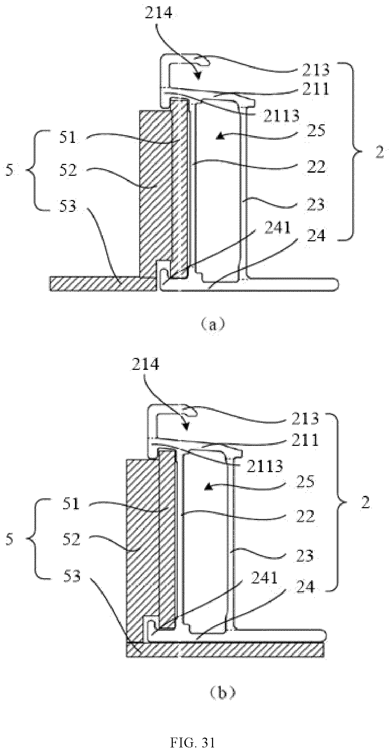

FIG. 31 is a schematic structural diagram of two fixing assemblies 5 and a frame 2 in a third style being assembled according to an embodiment of the present application.

In some embodiments, referring to FIG. 31, the photovoltaic module may further includes a fixing assembly 5. The fixing assembly 5 includes a inserting portion 51, a connecting portion 52, and a fixing portion 53 connected in sequence. The inserting portion 51 is located in the second groove 25101. Referring to (b) of FIG. 10, the fixing portion 53 may be located on a bottom surface of the third supporting portion 24. Alternatively, referring to (a) of FIG. 10, the fixing portion 53 may be located on a side of the third supporting portion 24 away from the second supporting portion 23 relative to the first supporting portion 22, and a bottom surface of the fixing portion 53 is flush with a bottom surface of the third supporting portion 24. One end of the connecting portion 52 is connected to a side of the inserting portion 51 away from the first supporting portion 22, and the other end of the connecting portion 52 is connected to the fixing portion 53.

In this way, the frame 2 can be fixedly installed with the bracket 6 through the fixing assembly 5. Due to the inserting portion 51 being clamped in the second groove 25101, the fixing assembly 5 and the frame 2 can be fixed relatively without other parts such as bolts.

In some embodiments, the inserting portion 51 may be provided with a first fixing hole. The first supporting portion 22 may be provided with a first positioning hole. The first fixing hole is in communication with the first positioning hole. In this way, the fixing assembly 5 and the frame 2 can also be fixed by bolts penetrating through the first fixing hole and the first positioning hole, so as to further improve assembly stability of the fixing assembly 5 and the frame 2 and stability of the photovoltaic module in use.

In some embodiments, the fixing portion 53 may be provided with a third fixing hole, and the third fixing hole is configured for mounting the fixing assembly 5 and the bracket 6. In some embodiments, when the fixing portion 53 is located on a bottom surface of the third supporting portion 24, the third supporting portion 24 may be provided with a bottom positioning hole, and the bottom positioning hole and the third fixing hole are in communication with each other, so that the frame 2 and the fixing portion 53 may be simultaneously fixed on the bracket through bolts penetrating through the bottom positioning hole and the third fixing hole.

In some embodiments, along a direction perpendicular to a side surface of the first supporting portion 22, a thickness of the insertion portion 51 is less than or equal to a depth of the second groove 25101, so that the insertion portion 51 is engaged in the second groove 25101.

In some embodiments, when the first sub-connecting plate 811 is located in the cavity 25 and the second supporting portion 23 is located in the recess 802, the second sub-connecting plate 821 can be located on a side of the second supporting portion 23 away from the first supporting portion 22, and the second groove 25101 may be only used to accommodate the inserting portion 51.

In some embodiments, when the second sub-connecting plate 821 is located in the cavity 25, and the first sub-connecting plate 811 is located in the second groove 25101, the inserting portion 51 and the first sub-connecting plate 811 may be respectively located at different positions of the frame 2 along the length direction thereof. That is, the inserting portion 51 and the first sub-connecting plate 811 are respectively located at different positions in the second groove 25101.

In this way, the second groove 25101 may be configured to fix the insertion portion 51, or may be configured to fix the first sub-connecting plate 811.

In some embodiments, when the second sub-connecting plate 821 is located in the cavity 25 and the first sub-connecting plate 811 is located in the second groove 25101, the inserting portion 51 and the first sub-connecting plate 811 can both be located at the same position in the second groove 25101. That is, the inserting portion 51 may be located on a side of the first sub-connecting plate 811 away from the first supporting portion 22. Such that, the inserting portion 51 and the first sub-connecting plate811 can be overlapped in the second groove25101, and the second groove 25101 can be snapped to the inserting portion51and the first sub-connecting plate 811.

In some embodiments, along a direction perpendicular to the side surface of the first supporting portion 22, a sum of a thickness of the inserting portion 51 and a thickness of the first sub-connecting plate 811 may be less than or equal to a depth of the first snapping component 2510, so that the first snapping component 2510 is snapped with the inserting portion 51 and the first sub-connecting plate 811 at the same time.

In some embodiments, the inserting portion 51 may be provided with a first fixing hole. The first sub-connecting plate 811 may be provided with a first through hole 911. The second sub-connecting plate 821 may be provided with a second through hole 912. The first supporting portion 22 may be provided with a first mounting hole 901. The second supporting portion 23 may be provided with a second mounting hole 902. The first fixing hole, the first through hole 911, the second through hole 912, the first mounting hole 901, and the second mounting hole 902 are in communication with each other. Such that, when the inserting portion 51 and the first sub-connecting plate 811 are stacked in the second groove 25101, a bolt can sequentially penetrate through the first fixing hole, the first through hole 911, the first mounting hole 901, the second through hole 912, and the second mounting hole 902, to fix the frame 2, the corner bracket 8, and the fixing assembly 5.

In some embodiments, referring to FIG. 1, the photovoltaic module may further include a laminated assembly 1. The laminated assembly 1 is located on a top surface of the first clamping portion 211 of the frame 2. The first clamping portion 211 is located on a side of the laminated assembly 1 away from sunlight.

In some embodiments, a surface of the first cover plate 11 facing the first adhesive film 12 and/or the surface of the second covering plate 16 facing the second adhesive film may be a concave-convex surface, thereby increasing a utilization rate of incident light.

In some embodiments, referring to FIG. 22 and FIG. 29 to FIG. 31, the frame 2 may further include a third clamping portion 213. The third clamping portion 213 is located above the first clamping portion 211. A bottom of the third clamping portion 213 is connected to the first clamping portion 211. A top portion of the third clamping portion 213 is bent towards the first clamping portion 211 to enclose with the first clamping portion 211 and form a first groove 214. The first groove 214 is configured to accommodate the laminated assembly 1.

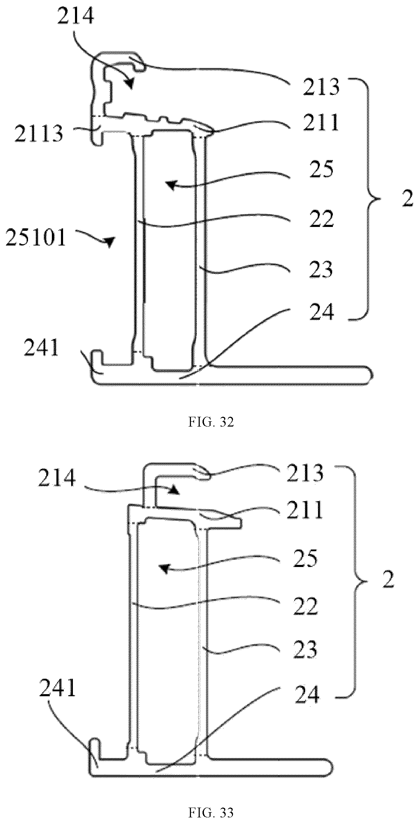

FIG. 32 is a schematic structural diagram of a frame 2 in a fourth style according to an embodiment of the present application.

In some embodiments, a connection point between the third clamping portion 213 and the first clamping portion 211 is an end of the first clamping portion 211 away from the second supporting portion 23 relative to the first supporting portion 22. An orthographic projection of an end of a top of of the third clamping portion 213 close to the first clamping portion 211 on a surface of the first clamping portion 211 coincides with a connection point of the first supporting portion 22 and the first clamping portion 211. That is, along the vertical direction, an end of the top of the third clamping portion 213 close to the first clamping portion 211 is flush with the first supporting portion 22. Such that when the laminated assembly 1 is placed in the first groove 214, the third clamping portion 213 may have sufficient downward pressing and fixing acting force on the laminated assembly 1, so as to prevent the top of the third clamping portion 213 from blocking a surface of the laminated assembly 1, thereby preventing a light receiving area of the laminated assembly 1 from being reduced, in order to maintain the photovoltaic module with better light absorption efficiency and improved light conversion rate.

In FIG. 22 and FIG. 29 to FIG. 32, the connection point between the third clamping portion 213 and the first clamping portion 211 being an end of the first clamping portion 211 away from the second supporting portion 23 relative to the first supporting portion 22 is taken as an example.

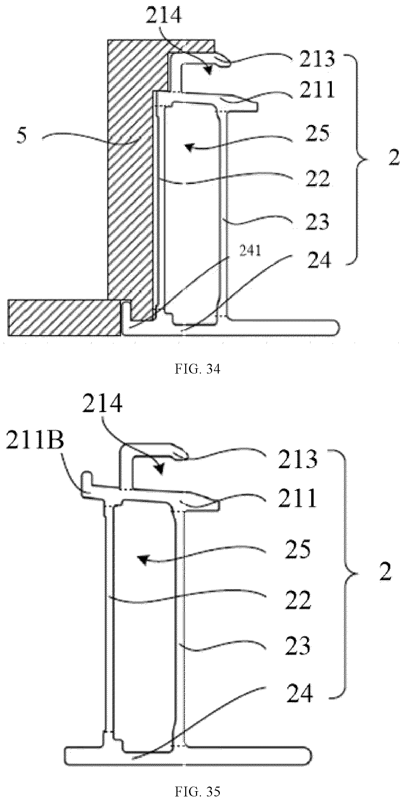

FIG. 33 is a schematic diagram of a frame 2 in a fifth style according to an embodiment of the present application. FIG. 34 is a schematic diagram of the fixing assembly 5 and the frame 2 in a fifth style being assembled according to an embodiment of the present application.

In some embodiments, referring to FIG. 33, a connection point between the third clamping portion 213 and the first clamping portion 211 may be closer to the second supporting portion 23 than a connection point between the first supporting portion 22 and the first clamping portion 211. Such that a corner may be formed between the end of the first clamping portion 211 away from the second supporting portion 23 relative to the first supporting portion 22 and the third clamping portion 213. Referring to FIG. 13, when the fixing assembly 5 is located on a aside of the first supporting portion 22 away from the second supporting portion 23, a surface of the fixing assembly 5 facing the frame 2 may be designed according to shapes of the first supporting portion 22 and the third clamping portion 213, so as to improve the stability of fixing the frame 2 on the bracket 6 by the fixing assembly 5. Compared with the third clamping portion 213 being aligned with the first supporting portion 22, a corner is formed by an end of the first clamping portion 211 away from the second supporting portion 23 relative to the first supporting portion 22 and the third clamping portion 213, which can limit relative displacement between the frame 2 and the fixing assembly 5, and increase the load of the fixing assembly 5 on the frame 2, thereby improving strength and stability of the photovoltaic module.

Referring to FIG. 33 and FIG. 34, the first bending portion 241 is formed by the end of the third supporting portion 24 away from the second supporting portion 23 relative to the first supporting portion 22 being bent towards the first clamping portion 211, so that the load between the fixing assembly 5 and the frame 2 can be further increased, the fixing strength of the fixing assembly 5 to the frame 2 can be improved, and the strength and stability of the photovoltaic module can be improved.

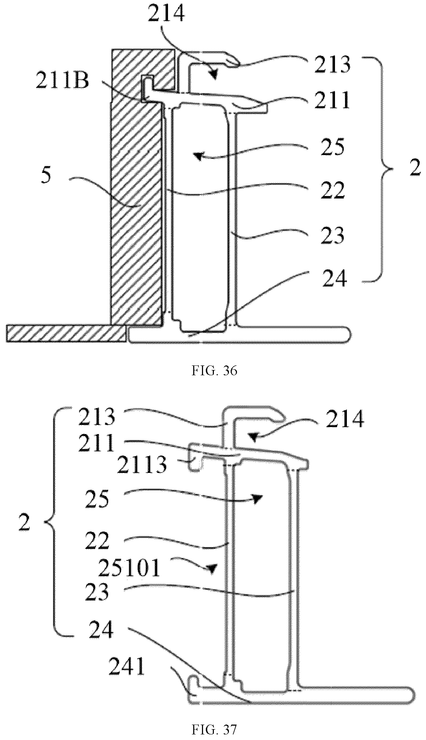

FIG. 35 is a schematic diagram of a frame 2 in a sixth style according to an embodiment of the present application. FIG. 36 is a schematic diagram of a fixing assembly 5 and a frame 2 in a sixth style being assembled according to an embodiment of the present application.

In some embodiments, referring to FIG. 35, when a connection point of the third clamping portion 213 and the first clamping portion 211 is closer to the second supporting portion 23 than the connection point of the first supporting portion 22 and the first clamping portion 211, an end of the first clamping portion 211 away from the second supporting portion 23 relative to the first supporting portion 22 may also be bent in a direction away from the third supporting portion 24 to form a third bending portion 2114. The third clamping portion 213 and the third bending portion 2114 may form a groove structure. Referring to FIG. 36, when the fixing assembly 5 is disposed on a side of the first supporting portion 22 away from the second supporting portion 23, a surface of the fixing assembly 5 facing the frame 2 may be designed according to shapes of the first supporting portion 22 and the third clamping portion 213, so that the third bending portion 2114 is clamped into the fixing assembly 5, thereby facilitating improving assembly stability of the fixing assembly 5 and the frame 2, thereby improving overall stability of the photovoltaic module in use.

Referring to FIG. 35 and FIG. 36, an end of the third supporting portion 24 away from the second supporting portion 23 relative to the first supporting portion 22 protrudes from a surface of the first supporting portion 22 away from the second supporting portion 23, such that the load between the fixing assembly 5 and the frame 2 can be further increased, the fixing strength of the fixing assembly 5 on the frame 2 is improved, and the strength and stability of the photovoltaic module are improved.

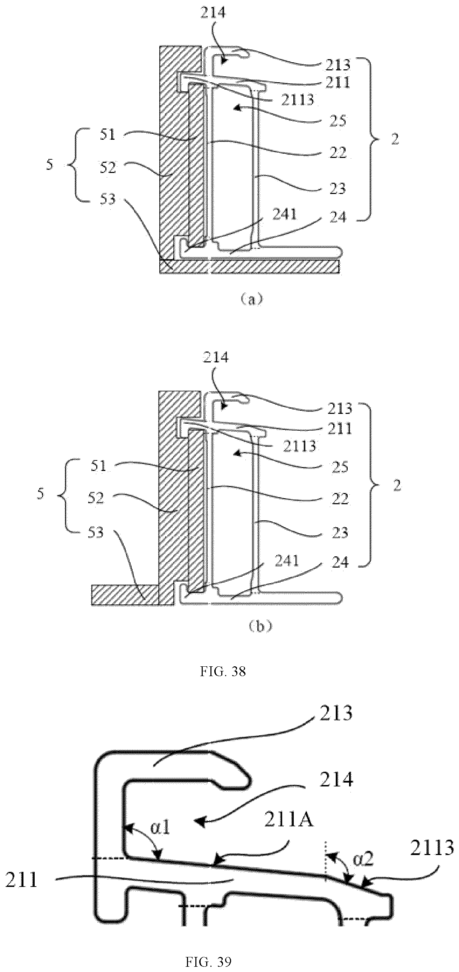

FIG. 37 is a schematic structural diagram of a frame 2 in a seventh style according to an embodiment of the present application. FIG. 38 is a schematic diagram of an assembly structure of two fixing assemblies and a frame 2 in a seventh style being assembled according to an embodiment of the present application.

In some embodiments, referring to FIG. 37, when the first bending portion 241, the first supporting portion 22, and the second bending portion 2113 of the frame 2 enclose and form the second groove 25101, a connection point between the third clamping portion 213 and the first clamping portion 211 can be flush with a connection point of the first supporting portion 22 and the first clamping portion 211. In this way, the third clamping portion 213 and the second bending portion 2113 form a corner, and referring to FIG. 38, when the frame 2 is assembled with the fixing assembly 5, a shape of the connecting portion 52 may be designed according to a shape of the corner formed by the third clamping portion 213 and the second bending portion 2113, thereby improving the load between the fixing assembly 5 and the frame 2, improving the fixing strength of the fixing assembly 5 to the frame 2 and further improving the strength and stability of the photovoltaic module.

In some embodiments, when the first bending portion 241, the first supporting portion 22 and the second supporting portion 23 of the frame enclose and form the second groove 25101, a connection point between the third clamping portion 213 and the first clamping portion 211 is located closer to the second supporting portion 23 than a connection point between the first supporting portion 22 and the first clamping portion 211.

FIG. 39 is enlarged view of the frame 2 of FIG. 30 in an embodiment of the present application.

The photovoltaic module provided in the embodiments of the present application includes a frame 2 and a corner bracket 8. The third supporting portion 24, the first supporting portion 22, the first clamping portion 211 and the second supporting portion 23 of the frame 2 are sequentially connected to enclose and form a cavity 25. The corner bracket 8 includes two corner-bracket connecting portions 801 connected in an L shape. Each of the corner-bracket connecting portions 801 includes a first sub-connecting plate 811 and a second sub-connecting plate 821 parallel to each other. A recess 802 is defined between the first sub-connecting plate 811 and the second sub-connecting plate 82. One of the first sub-connecting plate 811 or the second sub-connecting plate 821 is disposed in the cavity 25, and the other one of the first sub-connecting plate 811 or the second sub-connecting plate 821 is disposed outside the cavity 25. In this way, friction forces may be generated between a surface of the first supporting portion 22 towards the cavity 25 and the corner-bracket connecting portions 801 and between a surface of the second supporting portion 23 towards the cavity 25 and the corner-bracket connecting portions 801. Moreover, referring to (a) of FIG. 25, when the first supporting portion 22 is located in the recess 802, a friction force may be generated between a surface of the first supporting portion 22 away from the second supporting portion 23 and the first sub-connecting plate 811. Alternatively, referring to (b) of FIG.25, when the second supporting portion 23 is located in the recess 802, a friction force may be generated between a surface of the second supporting portion 23 away from the first supporting portion 22 and the second sub-connecting plate 821. That is to say, when the corner connector 8 is assembled into the cavity 25, a friction force may be generated on at least three contact surfaces between the corner connector 8 and the frame 2. Compared with the corner-bracket connecting portions 801 being integrally arranged in the cavity 25, at least one contact surface is added between the corner bracket 8 and the frame 2, which is beneficial to improving the assembly stability of the corner bracket 8 and the frame 2. In the use process of the photovoltaic module, the first sub-connecting plate 811 or the second sub-connecting plate 821 in the cavity 25 may have a problem of dimensional deviation due to wear, so that mounting stability of the first sub-connecting plate 811 or the second sub-connecting plate 821 in the cavity 25 may be reduced. However, since the recess 802 of the corner bracket 8 can restrict movement of the first supporting portion 22 or the second supporting portion 23, the recess 802 can make up size deviation of the first supporting portion 22 or the second supporting portion 23, stabilize the relative positions of the corner bracket 8 and the frame 2, thereby avoiding the problem that the corner bracket 8 directly falls off from the frame 2, thereby facilitating improving stability of the photovoltaic module in use.

A person of ordinary skill in the art may understand that the foregoing implementations are specific embodiments for implementing the present application, and in practical applications, various changes may be made in form and detail without departing from the scope of the present application. Any person skilled in the art may make various changes and modifications without departing from the scope of the present application, and therefore, the protection scope of the present application shall be subject to the scope defined in the claims.

Although some specific embodiments of the present application have been described in detail by way of examples, those skilled in the art should understand that the above examples are for illustration only and are not intended to limit the scope of the present application. A person skilled in the art should understand that the foregoing embodiments may be modified without departing from the scope of the present application. The scope of the present application is defined by the appended claims.

The above are only preferred embodiments of the present application and are not intended to limit the present application, and for those skilled in the art, the present application may have various modifications and changes.

The technical features of the embodiments described above may be combined arbitrarily, so that the description is concise, and all possible combinations of the technical features in the above embodiments are not described; however, as long as the combination of these technical features does not conflict, it should be considered that the scope is recited in the present specification.

The above-mentioned embodiments of only express several implementations of the present application, and the description thereof is relatively specific and detailed, but cannot be understood as a limitation on the scope of the present application. The protection scope of the present application shall be subject to the appended claims.

## Claims

1. A photovoltaic module, comprising a laminated assembly (1) and a frame (2), wherein the frame (2) comprises a clamping frame (21), the clamping frame (21) is sleeved on an edge of the laminated assembly (1), the clamping frame (21) comprises a first clamping portion (211), the first clamping portion (211) is disposed on a side of the laminated assembly (1) away from sunlight, the first clamping portion (211) comprises a first surface (211A) and a second surface (211B), wherein along a thickness direction of the laminated assembly (1), the first surface (211A) and the second surface (211B) of the first clamping portion (211) are both disposed on a side of the first clamping portion (211) towards the laminated assembly (1), the first surface (211A) and the second surface (211B) of the first clamping portion (211) are both inclined and extend away from the laminated assembly (1), and the second surface (211B) of the first clamping portion (211) is located on a side of the first surface (211A) of the first clamping portion (211) away from the edge of the laminated assembly (1); and
an angle *α₁* is defined between an inclined direction of the first surface (211A) of the first clamping portion (211) and the thickness direction of the laminated assembly (1), an angle *α*₂ is defined between an inclined direction of the second surface (211B) of the first clamping portion (211) and the thickness direction of the laminated assembly (1), and the angle *α*₁ between the inclined direction of the first surface (211A) of the first clamping portion (211) and the thickness direction of the laminated assembly (1) is less than the angle *α₂* between the inclined direction of the second surface (211B) of the first clamping portion (211) and the thickness direction of the laminated assembly (1), **characterized in that**
the angle *α*₁ between the inclined direction of the first surface (211A) of the first clamping portion (211) and the thickness direction of the laminated assembly (1) and the angle *α*₂ between the inclined direction of the second surface (211B) of the first clamping portion (211) and the thickness direction of the laminated assembly (1) satisfy following relationship: 10° ≤ *α*₂ - *α*₁ ≤ 20°.

2. The photovoltaic module of claim 1, wherein the angle *α₁* between the inclined direction of the first surface (211A) of the first clamping portion (211) and the thickness direction of the laminated assembly (1) satisfies following relationship: 90° < *α₁* ≤ 100°.

3. The photovoltaic module of claim 1 or 2, wherein the frame (2) further comprises a first supporting portion (22), a second supporting portion (23) and a third supporting portion (24), the first supporting portion (22) and the second supporting portion (23) are disposed opposite to each other along a first direction, the third supporting portion (24) and the first clamping portion (211) are disposed opposite to each other along the thickness direction of the laminated assembly (1); one end of the first supporting portion (22) and one end of the second supporting portion (23) are each connected to the first clamping portion (211), the other end of the first supporting portion (22) and the other end of the second supporting portion (23) are each connected to the third supporting portion (24); and the third supporting portion (24) is configured to be fixedly connected to a roof.

4. The photovoltaic module of claim 3, wherein the frame (2) further comprises a second clamping portion (212) and a third clamping portion (213), the third clamping portion (213) and the first clamping portion (211) are disposed opposite to each other along the thickness direction of the laminated assembly (1), the third clamping portion (213) is disposed on a side of the laminated assembly (1) towards the sunlight, two ends of the second clamping portion (212) are connected to the first clamping portion (211) and the third clamping portion (213) respectively along the thickness direction of the laminated assembly (1); and a distance between the second clamping portion (212) and the first supporting portion (22) along the first direction is greater than 0.

5. The photovoltaic module of claim 4, wherein a first groove (214) is defined by a top of the third clamping portion (213) being bent towards the first clamping portion (211) and the first clamping portion (211) surrounding, an orthographic projection of an end of the top of the third clamping portion (213) towards the first clamping portion (211) located on a surface of the first clamping portion (22) overlaps with a connection point defined between the first supporting portion (22) and the first clamping portion (211).

6. The photovoltaic module of any of claims 3 to 5, wherein the frame further comprises an extending portion (26) disposed on the first supporting portion (22), the extending portion (26) is disposed on a side of the first supporting portion (22) away from the second supporting portion (23) along the first direction; the number of the extending portion (26) is one, or a plurality of extending portions (26) are arranged at intervals along the thickness direction of the laminated assembly (1).

7. The photovoltaic module of any of claims 3 to 6, wherein the first clamping portion (211), the first supporting portion (22), the third supporting portion (24) and the second supporting portion (23) are surrounded to define a cavity (25), the cavity (25) is provided with a reinforcing frame (27); and the number of the reinforcing frame (27) is at least two, two adjacent reinforcing frames (27) are connected to each other to be V-shaped or X-shaped.

8. The photovoltaic module of any preceding claim, further comprising a junction box (3), wherein the junction box (3) is disposed on a side of the laminated assembly (1) where a longer side of the laminated assembly (1) is located, or the junction box (3) is disposed on a side of the laminated assembly (1) where a shorter side of the laminated assembly (1) is located; and the junction box (3) is an integrated junction box, the integrated junction box is connected to a positive pole and a negative pole of the laminated assembly (1); or the junction box comprises a first junction box (31) and a second junction box (32), the first junction box (31) is connected to a positive pole of the laminated assembly (1), and the second junction box (32) is connected to a negative pole of the laminated assembly (1); or
the photovoltaic module further comprises a junction box (3) and an inverter (4), wherein the junction box (3) and the inverter (4) are arranged along the first direction; a distance *L₁* between the inverter (4) and an edge of the photovoltaic module along the first direction satisfies following relationship: 350 mm ≤ *L₁* ≤ 400 mm; and along a second direction perpendicular to the first direction, a distance *L₂* between the inverter (4) and the edge of the photovoltaic module satisfies following relationship: 240 mm ≤ *L₂* ≤ 300 mm.

9. The photovoltaic module of claim 7, further comprising a photovoltaic-module mounting structure, wherein the photovoltaic-module mounting structure comprises a fixing assembly (5); the clamping frame (21) is provided a first groove (214) configured to accommodate the laminated assembly (1); an outer surface wall of the cavity (25) is provided with a snapping portion (251), the snapping portion (251) and the cavity (25) are sequentially arranged along an opening direction of the first groove (214); the fixing assembly (5) comprises an inserting portion (51) connected to the snapping portion (251), the fixing assembly (5) further comprises a connecting portion (52) and a fixing portion (53), the inserting portion (51) is connected to the fixing portion (53) via the connecting portion (52), and the fixing portion (53) is configured to fix an bracket (6).

10. The photovoltaic module of claim 9, wherein the snapping portion (251) comprises a first snapping component (2510) and a second snapping component (2511) opposite to each other, the first snapping component (2510) is disposed on a side of the second snapping component (2511) towards the first groove (214); and the inserting portion (51) comprises a snapping block (510), the snapping block (510) is snapped between the first snapping component (2510) and the second snapping component (2511); and/or
the fixing portion (53) comprises a fixing block (531), the fixing block (531) is provided with a third hole (5310), the third hole (5310) penetrates through the fixing block (21) along a direction from the clamping frame (21) to the first clamping portion (211); and the fixing block (531) is connected to the bracket (6) via the second connecting component (72).

11. The photovoltaic module of claim 10, wherein the first snapping component (2510) is provided with a second groove (25101), a side of the second groove (25101) towards the first groove (214) is recessed, the second snapping component (2511) is provided with a third clamping portion (25111), a side of the third groove (25111) away from the first groove (214) is recessed, the second groove (25101) and the third groove (25111) are symmetrically arranged; two ends of the snapping block (510) are snapped with the second groove (25101) and the third groove (25111), respectively; and/or the snapping block (510) is provided with a first hole (5101), the first hole (5101) penetrates through the snapping block (510) along the opening direction of the first groove (214); an outer sidewall of the cavity (25) is provided with a second hole (2501) corresponding to the first hole (5101),
the second hole (2501) penetrates through the outer sidewall of the cavity (25) along the opening direction of the first groove (214), the snapping block (510) is connected to the outer sidewall of the cavity (25) via the first connecting component (71);
the connecting portion (52) is disposed on a side of the snapping block (510) away from the first groove (214), a section of the connecting portion (52) along a direction from a side of the clamping frame (21) towards the cavity (25) is in an inverted-L shape;
the connecting portion (52) comprises a transverse plate (521) and a vertical plate (522), the vertical plate (522) is connected to the transverse plate (521), an inverted-L structure is defined between the transverse plate (521) and the vertical plate (522), the transverse plate (521) is connected to a side of the snapping block (510) away from the cavity (25), the vertical plate (522) is connected to an end of the fixing portion (53), and the fixing portion (53) extends toward or away from a bottom wall of the cavity (25).

12. The photovoltaic module of claim 11, wherein an orthographic projection of the connecting portion (52), an orthographic projection of the snapping block (510) and an orthographic projection of the laminated assembly (1) along a direction from the clamping frame (21) towards the cavity (25) all overlaps with an orthographic projection of the fixing portion (53); and/or
an orthographic projection of the inserting portion (51), an orthographic projection of the connecting portion (52) and an orthographic projection of the laminated assembly (1) along a direction from the clamping frame (21) towards the cavity (25) all does not overlap with the orthographic projection of the fixing portion (53).

13. The photovoltaic module of any preceding claim, wherein the frame (2) further comprises a first supporting portion (22), a second supporting portion (23) and a third supporting portion (24), the third supporting portion (24), the first supporting portion (22), the first clamping portion (211) and the second supporting portion (23) are sequentially surrounded to define a cavity (25);
the photovoltaic module further comprises a corner bracket (8), the corner bracket (8) comprises two corner-bracket connecting portions (801) connected to each other, the two corner-bracket connecting portions (801) are L-shaped, each of the two corner-bracket connecting portions (801) comprises a first sub-connecting plate (811) and a second sub-connecting plate (821) parallel to each other, a recess (802) is formed between the first sub-connecting plate (811) and the second sub-connecting plate (821); and
the first sub-connecting plate (811) is disposed in the cavity (25), the second supporting portion (23) is disposed in the recess (802); or the second sub-connecting plate (821) is disposed in the cavity (25), the first supporting portion (22) is disposed in the recess (802).

14. The photovoltaic module of claim 13, wherein a width of the recess (802) is less than or equal to a thickness of the first supporting portion (22), or a width of the recess (802) is less than or equal to a thickness of the second supporting portion (23); and/or a surface of the first sub-connecting plate (811) and/or the second sub-connecting plate (821) towards the recess (802) comprises a snapping structure (803).

15. The photovoltaic module of claim 14, wherein a first bending portion (2534) is formed by an end of the third supporting portion (24) away from the second supporting portion (23) relative to the first supporting portion (22) being bent towards the first clamping portion (211); a second bending portion (2113) is formed by an end of the first clamping portion (211) away from the second supporting portion (23) relative to the first supporting portion (22) being bent towards the third supporting portion (24); and the second groove (25101) is defined by the first bending portion (2534), the first supporting portion (22) and the second bending portion (2113) surrounding;
the second sub-connecting plate (821) is disposed in the cavity (25), the first supporting portion (22) is disposed in the recess (802), and the first sub-connecting plate (811) is disposed in the second groove (25101).

## Patentansprüche

1. Fotovoltaisches Modul, umfassend eine laminierte Baugruppe (1) und einen Rahmen (2), wobei der Rahmen (2) einen Klemmrahmen (21) umfasst, der Klemmrahmen (21) auf einer Kante der laminierten Baugruppe (1) aufgeschoben ist, der Klemmrahmen (21) einen ersten Klemmabschnitt (211) umfasst, der erste Klemmabschnitt (211) auf einer von Sonnenlicht abgewandten Seite der laminierten Baugruppe (1) angeordnet ist, der erste Klemmabschnitt (211) eine erste Oberfläche (211A) und eine zweite Oberfläche (211B) umfasst, wobei die erste Oberfläche (211A) und die zweite Oberfläche (211B) des ersten Klemmabschnitts (211) beide entlang einer Dickenrichtung der laminierten Baugruppe (1) auf einer der laminierten Baugruppe (1) zugewandten Seite des ersten Klemmabschnitts (211) angeordnet sind, die erste Oberfläche (211A) und die zweite Oberfläche (211B) des ersten Klemmabschnitts (211) beide geneigt sind und sich von der laminierten Baugruppe (1) abgewandt erstrecken und sich die zweite Oberfläche (211B) des ersten Klemmabschnitts (211) auf einer von der Kante der laminierten Baugruppe (1) abgewandten Seite der ersten Oberfläche (211A) des ersten Klemmabschnitts (211) befindet; und
ein Winkel *a₁* zwischen einer geneigten Richtung der ersten Oberfläche (211A) des ersten Klemmabschnitts (211) und der Dickenrichtung der laminierten Baugruppe (1) definiert ist, ein Winkel *a*₂ zwischen einer geneigten Richtung der zweiten Oberfläche (211B) des ersten Klemmabschnitts (211) und der Dickenrichtung der laminierten Baugruppe (1) definiert ist und der Winkel *a₁* zwischen der geneigten Richtung der ersten Oberfläche (211A) des ersten Klemmabschnitts (211) und der Dickenrichtung der laminierten Baugruppe (1) kleiner als der Winkel *α*₂ zwischen der geneigten Richtung der zweiten Oberfläche (211B) des ersten Klemmabschnitts (211) und der Dickenrichtung der laminierten Baugruppe (1) ist, **dadurch gekennzeichnet, dass** der Winkel *a₁* zwischen der geneigten Richtung der ersten Oberfläche (211A) des ersten Klemmabschnitts (211) und der Dickenrichtung der laminierten Baugruppe (1) und der Winkel *α*₂ zwischen der geneigten Richtung der zweiten Oberfläche (211B) des ersten Klemmabschnitts (211) und der Dickenrichtung der laminierten Baugruppe (1) folgende Beziehung erfüllen: 10° ≤ *α*₂ *- a₁* ≤ 20°.

2. Fotovoltaisches Modul nach Anspruch 1, wobei der Winkel *a₁* zwischen der geneigten Richtung der ersten Oberfläche (211A) des ersten Klemmabschnitts (211) und der Dickenrichtung der laminierten Baugruppe (1) folgende Beziehung erfüllt: 90° < *a₁* ≤ 100°.

3. Fotovoltaisches Modul nach Anspruch 1 oder 2, wobei der Rahmen (2) ferner einen ersten Stützabschnitt (22), einen zweiten Stützabschnitt (23) und einen dritten Stützabschnitt (24) umfasst, der erste Stützabschnitt (22) und der zweite Stützabschnitt (23) entlang einer ersten Richtung gegenüber voneinander angeordnet sind, der dritte Stützabschnitt (24) und der erste Klemmabschnitt (211) entlang der Dickenrichtung der laminierten Baugruppe (1) gegenüber voneinander angeordnet sind; ein Ende des ersten Stützabschnitts (22) und ein Ende des zweiten Stützabschnitts (23) jeweils mit dem ersten Klemmabschnitt (211) verbunden sind, das andere Ende des ersten Stützabschnitts (22) und das andere Ende des zweiten Stützabschnitts (23) jeweils mit dem dritten Stützabschnitt (24) verbunden sind; und der dritte Stützabschnitt (24) dazu konfiguriert ist, fest mit einem Dach verbunden zu sein.

4. Fotovoltaisches Modul nach Anspruch 3, wobei der Rahmen (2) ferner einen zweiten Klemmabschnitt (212) und einen dritten Klemmabschnitt (213) umfasst, der dritte Klemmabschnitt (213) und der erste Klemmabschnitt (211) entlang der Dickenrichtung der laminierten Baugruppe (1) gegenüber voneinander angeordnet sind, der dritte Klemmabschnitt (213) auf einer dem Sonnenlicht zugewandten Seite der laminierten Baugruppe (1) angeordnet ist, zwei Enden des zweiten Klemmabschnitts (212) entlang der Dickenrichtung der laminierten Baugruppe (1) mit dem ersten Klemmabschnitt (211) beziehungsweise dem dritten Klemmabschnitt (213) verbunden sind; und ein Abstand zwischen dem zweiten Klemmabschnitt (212) und dem ersten Stützabschnitt (22) entlang der ersten Richtung größer als 0 ist.

5. Fotovoltaisches Modul nach Anspruch 4, wobei eine erste Nut (214) dadurch definiert ist, dass eine Oberseite des dritten Klemmabschnitts (213) zu dem ersten Klemmabschnitt (211) gebogen ist und der erste Klemmabschnitt (211) diese umschließt, eine orthografische Projektion eines Endes der Oberseite des dritten Klemmabschnitts (213) zu dem ersten Klemmabschnitt (211), die sich auf einer Oberfläche des ersten Klemmabschnitts (22) befindet, mit einem zwischen dem ersten Stützabschnitt (22) und dem ersten Klemmabschnitt (211) definierten Verbindungspunkt überlappt.

6. Fotovoltaisches Modul nach einem der Ansprüche 3 bis 5, wobei der Rahmen ferner einen auf dem ersten Stützabschnitt (22) angeordneten Verlängerungsabschnitt (26) umfasst, der Verlängerungsabschnitt (26) auf einer von dem zweiten Stützabschnitt (23) abgewandten Seite des ersten Stützabschnitts (22) entlang der ersten Richtung angeordnet ist; die Anzahl des Verlängerungsabschnitts (26) eins ist oder eine Vielzahl von Verlängerungsabschnitten (26) in Abständen entlang der Dickenrichtung der laminierten Baugruppe (1) eingerichtet ist.

7. Fotovoltaisches Modul nach einem der Ansprüche 3 bis 6, wobei der erste Klemmabschnitt (211), der erste Stützabschnitt (22), der dritte Stützabschnitt (24) und der zweite Stützabschnitt (23) umschlossen sind, um einen Hohlraum (25) zu definieren, der Hohlraum (25) mit einem Verstärkungsrahmen (27) bereitgestellt ist; und die Anzahl des Verstärkungsrahmens (27) mindestens zwei ist, zwei benachbarte Verstärkungsrahmen (27) miteinander verbunden sind, um V-förmig oder X-förmig zu sein.

8. Fotovoltaisches Modul nach einem der vorhergehenden Ansprüche, ferner umfassend eine Anschlussdose (3), wobei die Anschlussdose (3) auf einer Seite der laminierten Baugruppe (1) angeordnet ist, auf der sich eine längere Seite der laminierten Baugruppe (1) befindet, oder die Anschlussdose (3) auf einer Seite der laminierten Baugruppe (1) angeordnet ist, auf der sich eine kürzere Seite der laminierten Baugruppe (1) befindet; und die Anschlussdose (3) eine integrierte Anschlussdose ist, die integrierte Anschlussdose mit einem Pluspol und einem Minuspol der laminierten Baugruppe (1) verbunden ist; oder die Anschlussdose eine erste Anschlussdose (31) und eine zweite Anschlussdose (32) umfasst, die erste Anschlussdose (31) mit einem Pluspol der laminierten Baugruppe (1) verbunden ist und die zweite Anschlussdose (32) mit einem Minuspol der laminierten Baugruppe (1) verbunden ist; oder
das fotovoltaische Modul ferner eine Anschlussdose (3) und einen Wechselrichter (4) umfasst, wobei die Anschlussdose (3) und der Wechselrichter (4) entlang der ersten Richtung eingerichtet sind; ein Abstand *L₁* zwischen dem Wechselrichter (4) und einer Kante des fotovoltaischen Moduls entlang der ersten Richtung folgende Beziehung erfüllt: 350 mm ≤ *L₁* ≤ 400 mm; und entlang einer zweiten Richtung, die senkrecht zu der ersten Richtung ist, ein Abstand *L₂* zwischen dem Wechselrichter (4) und der Kante des fotovoltaischen Moduls folgende Beziehung erfüllt: 240 mm ≤ *L₂* ≤ 300 mm.

9. Fotovoltaisches Modul nach Anspruch 7, ferner umfassend eine Montagekonstruktion für das fotovoltaische Modul, wobei die Montagekonstruktion für das fotovoltaische Modul eine Befestigungsbaugruppe (5) umfasst; der Klemmrahmen (21) mit einer ersten Nut (214) bereitgestellt ist, die dazu konfiguriert ist, die laminierte Baugruppe (1) aufzunehmen; eine äußere Oberflächenwand des Hohlraums (25) mit einem Schnappabschnitt (251) bereitgestellt ist, der Schnappabschnitt (251) und der Hohlraum (25) entlang einer Öffnungsrichtung der ersten Nut (214) sequenziell eingerichtet sind; die Befestigungsbaugruppe (5) einen mit dem Schnappabschnitt (251) verbundenen Einfügeabschnitt (51) umfasst, die Befestigungsbaugruppe (5) ferner einen Verbindungsabschnitt (52) und einen Befestigungsabschnitt (53) umfasst, der Einfügeabschnitt (51) über den Verbindungsabschnitt (52) mit dem Befestigungsabschnitt (53) verbunden ist und der Befestigungsabschnitt (53) dazu konfiguriert ist, eine Halterung (6) zu befestigen.

10. Fotovoltaisches Modul nach Anspruch 9, wobei der Schnappabschnitt (251) ein erstes Schnappbauteil (2510) und ein zweites Schnappbauteil (2511), die gegenüber voneinander sind, umfasst, das erste Schnappbauteil (2510) an einer der ersten Nut (214) zugewandten Seite des zweiten Schnappbauteils (2511) angeordnet ist; und der Einfügeabschnitt (51) einen Schnappblock (510) umfasst, der Schnappblock (510) zwischen dem ersten Schnappbauteil (2510) und dem zweiten Schnappbauteil (2511) geschnappt ist; und/oder
der Befestigungsabschnitt (53) einen Befestigungsblock (531) umfasst, der Befestigungsblock (531) mit einer dritten Bohrung (5310) bereitgestellt ist, die dritte Bohrung (5310) den Befestigungsblock (21) entlang einer Richtung von dem Klemmrahmen (21) zu dem ersten Klemmabschnitt (211) durchdringt; und der Befestigungsblock (531) über das zweite Verbindungsbauteil (72) mit der Halterung (6) verbunden ist.

11. Fotovoltaisches Modul nach Anspruch 10, wobei das erste Schnappbauteil (2510) mit einer zweiten Nut (25101) bereitgestellt ist, eine der ersten Nut (214) zugewandte Seite der zweiten Nut (25101) vertieft ist, das zweite Schnappbauteil (2511) mit einem dritten Klemmabschnitt (25111) bereitgestellt ist, eine von der ersten Nut (214) abgewandte Seite der dritten Nut (25111) vertieft ist, die zweite Nut (25101) und die dritte Nut (25111) symmetrisch eingerichtet sind; zwei Enden des Schnappblocks (510) mit der zweiten Nut (25101) beziehungsweise der dritten Nut (25111) geschnappt sind; und/oder der Schnappblock (510) mit einer ersten Bohrung (5101) bereitgestellt ist, die erste Bohrung (5101) den Schnappblock (510) entlang der Öffnungsrichtung der ersten Nut (214) durchdringt; eine äußere Seitenwand des Hohlraums (25) mit einer zweiten Bohrung (2501) bereitgestellt ist, die der ersten Bohrung (5101) entspricht, die zweite Bohrung (2501) die äußere Seitenwand des Hohlraums (25) entlang der Öffnungsrichtung der ersten Nut (214) durchdringt, der Schnappblock (510) über das erste Verbindungsbauteil (71) mit der äußeren Seitenwand des Hohlraums (25) verbunden ist;
der Verbindungsabschnitt (52) auf einer von der ersten Nut (214) abgewandten Seite des Schnappblocks (510) angeordnet ist, ein Teilabschnitt des Verbindungsabschnitts (52) entlang einer Richtung von einer Seite des Klemmrahmens (21) zu dem Hohlraum (25) in einer Form eines umgekehrten L ist;
der Verbindungsabschnitt (52) eine Querplatte (521) und eine Vertikalplatte (522) umfasst, die Vertikalplatte (522) mit der Querplatte (521) verbunden ist und eine Konstruktion eines umgekehrten L zwischen der Querplatte (521) und der Vertikalplatte (522) definiert ist, die Querplatte (521) mit einer von dem Hohlraum (25) abgewandten Seite des Schnappblocks (510) verbunden ist, die Vertikalplatte (522) mit einem Ende des Befestigungsabschnitts (53) verbunden ist und sich der Befestigungsabschnitt (53) einer unteren Wand des Hohlraums (25) zugewandt oder abgewandt erstreckt.

12. Fotovoltaisches Modul nach Anspruch 11, wobei eine orthografische Projektion des Verbindungsabschnitts (52), eine orthografische Projektion des Schnappblocks (510) und eine orthografische Projektion der laminierten Baugruppe (1) entlang einer Richtung von dem Klemmrahmen (21) zu dem Hohlraum (25) alle mit einer orthografischen Projektion des Befestigungsabschnitts (53) überlappen; und/oder
sich eine orthografische Projektion des Einfügeabschnitts (51), eine orthografische Projektion des Verbindungsabschnitts (52) und eine orthografische Projektion der laminierten Baugruppe (1) entlang einer Richtung von dem Klemmrahmen (21) zu dem Hohlraum (25) alle nicht mit der orthografischen Projektion des Befestigungsabschnitts (53) überlappen.

13. Fotovoltaisches Modul nach einem der vorhergehenden Ansprüche, wobei der Rahmen (2) ferner einen ersten Stützabschnitt (22), einen zweiten Stützabschnitt (23) und einen dritten Stützabschnitt (24) umfasst, der dritte Stützabschnitt (24), der erste Stützabschnitt (22), der erste Klemmabschnitt (211) und der zweite Stützabschnitt (23) sequenziell umschlossen sind, um einen Hohlraum (25) zu definieren;
das fotovoltaische Modul ferner eine Eckhalterung (8) umfasst, die Eckhalterung (8) zwei miteinander verbundene Eckhalterungsverbindungsabschnitte (801) umfasst, die zwei Eckhalterungsverbindungsabschnitte (801) L-förmig sind, jeder der zwei Eckhalterungsverbindungsabschnitte (801) eine erste Teilverbindungsplatte (811) und eine zweite Teilverbindungsplatte (821), die parallel zueinander sind, umfasst, eine Vertiefung (802) zwischen der ersten Teilverbindungsplatte (811) und der zweiten Teilverbindungsplatte (821) ausgebildet ist; und
die erste Teilverbindungsplatte (811) in dem Hohlraum (25) angeordnet ist, der zweite Stützabschnitt (23) in der Vertiefung (802) angeordnet ist; oder die zweite Teilverbindungsplatte (821) in dem Hohlraum (25) angeordnet ist, der erste Stützabschnitt (22) in der Vertiefung (802) angeordnet ist.

14. Fotovoltaisches Modul nach Anspruch 13, wobei eine Breite der Vertiefung (802) kleiner oder gleich einer Dicke des ersten Stützabschnitts (22) ist oder eine Breite der Vertiefung (802) kleiner oder gleich einer Dicke des zweiten Stützabschnitts (23) ist; und/oder eine der Vertiefung (802) zugewandten Oberfläche der ersten Teilverbindungsplatte (811) und/oder der zweiten Teilverbindungsplatte (821) eine Schnappkonstruktion (803) umfasst.

15. Fotovoltaisches Modul nach Anspruch 14, wobei ein erster Biegeabschnitt (2534) dadurch ausgebildet ist, dass ein von dem zweiten Stützabschnitt (23) relativ zu dem ersten Stützabschnitt (22) abgewandtes Ende des dritten Stützabschnitts (24) zu dem ersten Klemmabschnitt (211) gebogen ist; ein zweiter Biegeabschnitt (2113) dadurch ausgebildet ist, dass ein von dem zweiten Stützabschnitt (23) relativ zu dem ersten Stützabschnitt (22) abgewandtes Ende des ersten Klemmabschnitts (211) zu dem dritten Stützabschnitt (24) gebogen ist; und die zweite Nut (25101) durch den ersten Biegeabschnitt (2534), den ersten Stützabschnitt (22) und den zweiten Biegeabschnitt (2113), der diesen umschließt, ausgebildet ist; die zweite Teilverbindungsplatte (821) in dem Hohlraum (25) angeordnet ist, der erste Stützabschnitt (22) in der Vertiefung (802) angeordnet ist und die erste Teilverbindungsplatte (811) in der zweiten Nut (25101) angeordnet ist.

## Revendications

1. Module photovoltaïque, comprenant un ensemble stratifié (1) et un cadre (2), dans lequel le cadre (2) comprend un cadre de serrage (21), le cadre de serrage (21) est manchonné sur un bord de l'ensemble stratifié (1), le cadre de serrage (21) comprend une première partie de serrage (211), la première partie de serrage (211) est disposée sur un côté de l'ensemble stratifié (1) à l'abri de lumière du soleil, la première partie de serrage (211) comprend une première surface (211A) et une seconde surface (211B), dans lequel, le long d'une direction de l'épaisseur de l'ensemble stratifié (1), la première surface (211A) et la seconde surface (211B) de la première partie de serrage (211) sont toutes deux disposées sur un côté de la première partie de serrage (211) orienté vers l'ensemble stratifié (1), la première surface (211A) et la seconde surface (211B) de la première partie de serrage (211) sont toutes deux inclinées et s'étendent à l'opposé de l'ensemble stratifié (1), et la seconde surface (211B) de la première partie de serrage (211) est située sur un côté de la première surface (211A) de la première partie de serrage (211) loin du bord de l'ensemble stratifié (1) ; et
un angle *α₁* est défini entre une direction inclinée de la première surface (211A) de la première partie de serrage (211) et la direction de l'épaisseur de l'ensemble stratifié (1), un angle α*₂* est défini entre une direction inclinée de la seconde surface (211B) de la première partie de serrage (211) et la direction de l'épaisseur de l'ensemble stratifié (1), et l'angle *α₁* entre la direction inclinée de la première surface (211A) de la première partie de serrage (211) et la direction de l'épaisseur de l'ensemble stratifié (1) est inférieur à l'angle *α₂* entre la direction inclinée de la seconde surface (211B) de la première partie de serrage (211) et la direction de l'épaisseur de l'ensemble stratifié (1), **caractérisé en ce que** l'angle *α₁* entre la direction inclinée de la première surface (211A) de la première partie de serrage (211) et la direction de l'épaisseur de l'ensemble stratifié (1), ainsi que l'angle *α₂* entre la direction inclinée de la seconde surface (211B) de la première partie de serrage (211) et la direction de l'épaisseur de l'ensemble stratifié (1), satisfont à une relation suivante : 10 ° ≤ *α₂ - α₁* ≤ 20 °.

2. Module photovoltaïque selon la revendication 1, dans lequel l'angle *α₁* entre la direction inclinée de la première surface (211A) de la première partie de serrage (211) et la direction de l'épaisseur de l'ensemble stratifié (1) satisfait à une relation suivante : 90 ° *< α₁* ≤ 100 °.

3. Module photovoltaïque selon la revendication 1 ou 2, dans lequel le cadre (2) comprend en outre une première partie de support (22), une deuxième partie de support (23) et une troisième partie de support (24), la première partie de support (22) et la deuxième partie de support (23) sont disposées à l'opposé l'une de l'autre le long d'une première direction, la troisième partie de support (24) et la première partie de serrage (211) sont disposées à l'opposé l'une de l'autre le long de la direction de l'épaisseur de l'ensemble stratifié (1) ; une extrémité de la première partie de support (22) et une extrémité de la deuxième partie de support (23) sont chacune reliées à la première partie de serrage (211), l'autre extrémité de la première partie de support (22) et l'autre extrémité de la deuxième partie de support (23) sont chacune reliées à la troisième partie de support (24) ; et la troisième partie de support (24) est configurée pour être reliée de manière fixe à un toit.

4. Module photovoltaïque selon la revendication 3, dans lequel le cadre (2) comprend en outre une deuxième partie de serrage (212) et une troisième partie de serrage (213), la troisième partie de serrage (213) et la première partie de serrage (211) sont disposées à l'opposé l'une de l'autre le long de la direction de l'épaisseur de l'ensemble stratifié (1), la troisième partie de serrage (213) est disposée sur un côté de l'ensemble stratifié (1) orienté vers la lumière du soleil, deux extrémités de la deuxième partie de serrage (212) sont reliées respectivement à la première partie de serrage (211) et à la troisième partie de serrage (213) le long de la direction de l'épaisseur de l'ensemble stratifié (1) ; et une distance entre la deuxième partie de serrage (212) et la première partie de support (22) le long de la première direction est supérieure à 0.

5. Module photovoltaïque selon la revendication 4, dans lequel une première rainure (214) est définie par une partie supérieure de la troisième partie de serrage (213) qui est courbée vers la première partie de serrage (211) et par la première partie de serrage (211) qui l'entoure, une projection orthogonale d'une extrémité de la partie supérieure de la troisième partie de serrage (213) vers la première partie de serrage (211), située sur une surface de la première partie de serrage (22), chevauche un point de liaison défini entre la première partie de support (22) et la première partie de serrage (211).

6. Module photovoltaïque selon l'une quelconque des revendications 3 à 5, dans lequel le cadre comprend en outre une partie d'extension (26) disposée sur la première partie de support (22), la partie d'extension (26) sont disposée sur un côté de la première partie de support (22) loin de la deuxième partie de support (23) le long de la première direction ; le nombre de la partie d'extension (26) est égal à un, ou une pluralité de parties d'extension (26) sont disposées à intervalles le long de la direction de l'épaisseur de l'ensemble stratifié (1).

7. Module photovoltaïque selon l'une quelconque des revendications 3 à 6, dans lequel la première partie de serrage (211), la première partie de support (22), la troisième partie de support (24) et la deuxième partie de support (23) sont délimitées pour définir une cavité (25), la cavité (25) est pourvue d'un cadre de renfort (27) ; et le nombre de cadres de renfort (27) est d'au moins deux, deux cadres de renfort (27) adjacents sont reliés l'un à l'autre pour avoir une forme en V ou en X.

8. Module photovoltaïque selon l'une quelconque revendication précédente, comprenant en outre une boîte de jonction (3), dans lequel la boîte de jonction (3) est disposée sur un côté de l'ensemble stratifié (1) où se trouve un côté plus long de l'ensemble stratifié (1), ou la boîte de jonction (3) est disposée sur un côté de l'ensemble stratifié (1) où se trouve un côté plus court de l'ensemble stratifié (1) ; et la boîte de jonction (3) est une boîte de jonction intégrée, la boîte de jonction intégrée est connecté à un pôle positif et à un pôle négatif de l'ensemble stratifié (1) ; ou la boîte de jonction comprend une première boîte de jonction (31) et une seconde boîte de jonction (32), la première boîte de jonction (31) est connectée à un pôle positif de l'ensemble stratifié (1), et la seconde boîte de jonction (32) est connectée à un pôle négatif de l'ensemble stratifié (1) ; ou
le module photovoltaïque comprend en outre une boîte de jonction (3) et un onduleur (4), dans lequel la boîte de jonction (3) et l'onduleur (4) sont disposés le long de la première direction ; une distance *L₁* entre l'onduleur (4) et un bord du module photovoltaïque le long de la première direction satisfait à une relation suivante : 350 mm ≤ *L₁* ≤ 400 mm ; et le long d'une seconde direction perpendiculaire à la première direction, une distance *L₂* entre l'onduleur (4) et le bord du module photovoltaïque satisfait à une relation suivante : 240 mm ≤ *L₂* ≤ 300 mm.

9. Module photovoltaïque selon la revendication 7, comprenant en outre une structure de montage de module photovoltaïque, dans lequel la structure de montage de module photovoltaïque comprend un ensemble de fixation (5) ; le cadre de serrage (21) est pourvu d'une première rainure (214) configurée pour loger l'ensemble stratifié (1) ; une paroi de surface externe de la cavité (25) est pourvue d'une partie d'encliquetage (251), la partie d'encliquetage (251) et la cavité (25) sont disposées séquentiellement le long d'une direction d'ouverture de la première rainure (214) ; l'ensemble de fixation (5) comprend une partie d'insertion (51) reliée à la partie d'encliquetage (251), l'ensemble de fixation (5) comprenant en outre une partie de liaison (52) et une partie de fixation (53), la partie d'insertion (51) est reliée à la partie de fixation (53) par l'intermédiaire de la partie de liaison (52), et la partie de fixation (53) est configurée pour fixer un support (6).

10. Module photovoltaïque selon la revendication 9, dans lequel la partie d'encliquetage (251) comprend un premier élément d'encliquetage (2510) et un second élément d'encliquetage (2511) situés à l'opposé l'un de l'autre, le premier élément d'encliquetage (2510) est disposé sur un côté du second élément d'encliquetage (2511) orienté vers la première rainure (214) ; et la partie d'insertion (51) comprend un bloc d'encliquetage (510), le bloc d'encliquetage (510) est encliqueté entre le premier élément d'encliquetage (2510) et le second élément d'encliquetage (2511) ; et/ou
la partie de fixation (53) comprend un bloc de fixation (531), le bloc de fixation (531) est pourvu d'un troisième trou (5310), le troisième trou (5310) pénètre à travers le bloc de fixation (21) le long d'une direction allant du cadre de serrage (21) vers la première partie de serrage (211) ; et le bloc de fixation (531) est relié au support (6) par l'intermédiaire du second élément de liaison (72).

11. Module photovoltaïque selon la revendication 10, dans lequel le premier élément d'encliquetage (2510) est pourvu d'une deuxième rainure (25101), un côté de la deuxième rainure (25101) orienté vers la première rainure (214) est en retrait, le second élément d'encliquetage (2511) est pourvu d'une troisième partie de serrage (25111), un côté de la troisième rainure (25111) loin de la première rainure (214) est en retrait, la deuxième rainure (25101) et la troisième rainure (25111) sont disposées symétriquement ; deux extrémités du bloc d'encliquetage (510) sont encliquetées avec la deuxième rainure (25101) et la troisième rainure (25111), respectivement ; et/ou le bloc d'encliquetage (510) est pourvu d'un premier trou (5101), le premier trou (5101) pénètre à travers le bloc d'encliquetage (510) le long de la direction d'ouverture de la première rainure (214) ; une paroi latérale externe de la cavité (25) est pourvue d'un deuxième trou (2501) correspondant au premier trou (5101), le deuxième trou (2501) pénètre à travers la paroi latérale externe de la cavité (25) le long de la direction d'ouverture de la première rainure (214), le bloc d'encliquetage (510) est relié à la paroi latérale externe de la cavité (25) par l'intermédiaire du premier élément de liaison (71) ;
la partie de liaison (52) est disposée sur un côté du bloc d'encliquetage (510) loin de la première rainure (214), une section de la partie de liaison (52), le long d'une direction allant d'un côté du cadre de serrage (21) vers la cavité (25), présente une forme en L inversé ;
la partie de liaison (52) comprend une plaque transversale (521) et une plaque verticale (522), la plaque verticale (522) est reliée à la plaque transversale (521), une structure en L inversé est définie entre la plaque transversale (521) et la plaque verticale (522), la plaque transversale (521) est reliée à un côté du bloc d'encliquetage (510) loin de la cavité (25), la plaque verticale (522) est reliée à une extrémité de la partie de fixation (53), et la partie de fixation (53) s'étend vers ou à l'opposé d'une paroi inférieure de la cavité (25).

12. Module photovoltaïque selon la revendication 11, dans lequel une projection orthogonale de la partie de liaison (52), une projection orthogonale du bloc d'encliquetage (510) et une projection orthogonale de l'ensemble stratifié (1) le long d'une direction allant du cadre de serrage (21) vers la cavité (25) chevauchent toutes une projection orthogonale de la partie de fixation (53) ; et/ou
une projection orthographique de la partie d'insertion (51), une projection orthographique de la partie de liaison (52) et une projection orthographique de l'ensemble stratifié (1) le long d'une direction allant du cadre de serrage (21) vers la cavité (25) ne chevauchent pas la projection orthographique de la partie de fixation (53).

13. Module photovoltaïque selon l'une quelconque revendication précédente, dans lequel le cadre (2) comprend en outre une première partie de support (22), une deuxième partie de support (23) et une troisième partie de support (24), la troisième partie de support (24), la première partie de support (22), la première partie de serrage (211) et la deuxième partie de support (23) sont délimitées séquentiellement pour définir une cavité (25) ;
le module photovoltaïque comprend en outre un support d'angle (8), le support d'angle (8) comprend deux parties de liaison de support d'angle (801) reliées l'une à l'autre, les deux parties de liaison de support d'angle (801) sont en forme de L, chacune des deux parties de liaison de support d'angle (801) comprend une première plaque de liaison secondaire (811) et une seconde plaque de liaison secondaire (821) parallèles l'une à l'autre, un évidement (802) est formé entre la première plaque de liaison secondaire (811) et la seconde plaque de liaison secondaire (821) ; et
la première plaque de liaison secondaire (811) est disposée dans la cavité (25), la deuxième partie de support (23) est disposée dans l'évidement (802) ; ou la seconde plaque de liaison secondaire (821) est disposée dans la cavité (25), la première partie de support (22) est disposée dans l'évidement (802).

14. Module photovoltaïque selon la revendication 13, dans lequel une largeur de l'évidement (802) est inférieure ou égale à une épaisseur de la première partie de support (22), ou une largeur de l'évidement (802) est inférieure ou égale à une épaisseur de la deuxième partie de support (23) ; et/ou une surface de la première plaque de liaison secondaire (811) et/ou de la seconde plaque de liaison secondaire (821) orientée vers l'évidement (802) comprend une structure d'encliquetage (803).

15. Module photovoltaïque selon la revendication 14, dans lequel une première partie courbée (2534) est formée par une extrémité de la troisième partie de support (24) loin de la deuxième partie de support (23) par rapport à la première partie de support (22), qui est courbée vers la première partie de serrage (211) ; une seconde partie courbée (2113) est formée par une extrémité de la première partie de serrage (211) loin de la deuxième partie de support (23) par rapport à la première partie de support (22), qui est courbée vers la troisième partie de support (24) ; et la deuxième rainure (25101) est définie par la première partie courbée (2534), la première partie de support (22) et la seconde partie courbée (2113) qui l'entourent ;
la seconde plaque de liaison secondaire (821) est disposée dans la cavité (25), la première partie de support (22) est disposée dans l'évidement (802), et la première plaque de liaison secondaire (811) est disposée dans la deuxième rainure (25101).
